# EUROPÄISCHE PATENTSCHRIFT

(11) **EP 1 010 908 B1**
(45) Veröffentlichungstag und Bekanntmachung des Hinweises auf die Patenterteilung: **28.01.2004**
(21) Anmeldenummer: 99124583.8
(22) Anmeldetag: 09.12.1999
(51) Int. Cl.: F16C 29/08

(54) **Linearführungseinrichtung**
Linear guiding device
Dispositif de guidage linéaire

(30) Priorität: 10.12.1998 DE 19857028
(43) Veröffentlichungstag der Anmeldung: 21.06.2000
(73) Patentinhaber: Rexroth Star GmbH, 97424 Schweinfurt (DE)
(72) Erfinder: Riedel, Gerhard, Dipl.-Ing., 97422 Schweinfurt (DE); Dütsch, German, 97424 Schweinfurt (DE)
(74) Vertreter: Herzog, Markus, Dipl.-Phys. Dr.

(56) Entgegenhaltungen:
- EP-A- 0 268 011
- DE-A- 4 334 311
- DE-A- 19 837 212
- DE-U- 9 320 135
- US-A- 4 706 510
- US-A- 4 878 390

## Beschreibung

Die Erfindung betrifft eine Linearführungseinrichtung, umfassend eine Führungsschiene mit einer Längsachse und mindestens einer Führungsbahn und eine an der mindestens einen Führungsbahn in Richtung der Längsachse geführte Läuferbaugruppe.

Verunreinigungen auf der Führungsbahn können zu Beeinträchtigungen der Laufruhe und der Führungspräzision der Läuferbaugruppe und zu vorzeitigem Verschleiß führen. Solche Verunreinigungen können von heißen Spänen stammen, die in spanabhebend arbeitenden Werkzeugmaschinen anfallen und sich auf die Führungsbahnen legen, wobei sogar die Gefahr besteht, daß sich die Späne in die Führungsbahnen einbrennen. Andere Verunreinigungen sind Schmutz- und Staubpartikel, die sich auf den Führungsbahnen ablagern können. Wenn sie sich mit Kühl- oder Schmiermitteln vermischen, kann ein abrasives Gemisch entstehen, das, wenn es in die Läuferbaugruppe gelangt, zu Abrieb an den Führungsbahnen und den Führungsorganen der Läuferbaugruppe führen kann. Obwohl herkömmliche Läuferbaugruppen häufig rundum gegenüber der Führungsschiene abgedichtet sind, kann dennoch nicht hundertprozentig ausgeschlossen werden, daß Verunreinigungen in das Innere der Läuferbaugruppe gelangen. Mikrorauhigkeiten in der Führungsschienenoberfläche und an den verwendeten Dichtelementen sind nämlich oftmals nicht zu vermeiden. Durch diese Mikrorauhigkeiten hindurch ist dann ein Eindringen der Verunreinigungen in das Innere der Läuferbaugruppe möglich.

Zum Schutz vor Verunreinigungen ist es bekannt, die Führungsschiene durch einen mit der Läuferbaugruppe bewegungsgekoppelten Faltenbalg abzudecken, so beispielsweise in einem Prospekt der Firma Deutsche Star "Schienenführungstische" mit der Nummer RD 82501/06.96 zu sehen. Das Material des Faltenbalgs kann jedoch durch heiße Späne leicht verschmoren, weshalb für solche Anwendungsfälle, bei denen mit einem starken Anfall von heißen Spänen zu rechnen ist, auf teleskopisch ein- und ausfahrbare Abdeckmechanismen zurückgegriffen wurde. Diese sind jedoch mit einem hohen Aufwand verbunden. Zudem benötigen Faltenbalg und Teleskopabdeckung Stauraum, der den verfügbaren Hub der Läuferbaugruppe verringert.

Des weiteren ist aus der DE 43 34 311 A1 eine Abdecklösung bekannt, bei der eine Führungsschiene in einem U-förmigen Profilgehäuse bodenseitig angebracht ist und die Längsöffnung des Gehäuses durch ein Abdeckband verschlossen ist, das an den einander gegenüberliegenden Seitenwänden des Gehäuses anliegt. Diese Lösung bietet einen sicheren Schutz vor Eindringen von Verunreinigungen in den Innenraum des Gehäuses, ist aber an das Vorhandensein des U-förmigen Profilgehäuses gebunden und damit nur für spezielle Anwendungsfälle geeignet.

Aufgabe der Erfindung ist es demnach, eine für ein breites Anwendungsgebiet der Linearführungseinrichtungen geeignete Abdecklösung anzugeben, die mit geringem Aufwand einen sicheren Schutz vor verunreinigungsbedingten Beeinträchtigungen der Führungsqualität der Linearführungseinrichtung bietet.

Zur Lösung dieser Aufgabe ist erfindungsgemäß vorgesehen, daß die Führungsbahn in Richtung der Längsachse beidseits der Läuferbaugruppe im wesentlichen über die jeweilige gesamte befahrbare Restlänge durch ein Abdeckband abgedeckt ist, welches an mindestens einer Abdeckbandkontaktzone der Führungsschiene anliegt oder dieser Abdeckbandkontaktzone naheliegt. Bei der erfindungsgemäßen Lösung liegt das Abdeckband demnach unmittelbar an der Führungsschiene an. Wenn das Abdeckband an der Abdeckbandkontaktzone nicht körperlich anliegt, sondern dieser nur "naheliegt", so soll dies bedeuten, dass der Abstand zwischen Abdeckbandkontaktzone und Abdeckband klein genug ist, um das Eindringen der im jeweiligen Anwendungsfall in Frage kommenden Partikel oder sonstiger Fremdstoffe zu verhindern. Somit ergibt sich ein hoher Grad an Unabhängigkeit von den konstruktiven Einbaugegebenheiten der Linearführungseinrichtung, gleichgültig ob diese z.B. mit einem U-Gehäuse ausgeführt ist oder ohne. Zudem kann das Abdeckband, da es sich nicht faltenbalgartig zusammendrücken und auseinanderziehen lassen muß, aus einem gegenüber heißen Spänen hinreichend unempfindlichen Material hergestellt werden. Gegenüber den angesprochenen Teleskopabdeckungen ergibt sich ein deutlich verringerter Konstruktionsaufwand der erfindungsgemäßen Abdecklösung. Zudem bleibt im wesentlichen der gesamte Verfahrweg erhalten, den die Führungsschiene an sich bereitstellt, weil das Abdeckband keinen Stauraum benötigt, der den Verfahrweg der Läuferbaugruppe einschränken würde.

Grundsätzlich können die Abdeckbandkontaktzonen und die Führungsbahn mindestens teilweise übereinstimmen. Eine optimale Anpassung der Abdeckbandkontaktzone an die Erfordernisse des Abdeckbands, insbesondere was die Dichtigkeit der Anlage anbelangt, ohne auf die konkrete Ausgestaltung der Führungsbahn Rücksicht nehmen zu müssen, kann dadurch erreicht werden, daß die Abdeckbandkontaktzone und die Führungsbahn mindestens teilweise verschieden sind.

Eine optimale Schonung der Führungsbahn ergibt sich, wenn das Abdeckband die Führungsbahn berührungslos abdeckt und an quer zur Längsachse beidseits der Führungsbahn gelegenen Abdeckbandkontaktzonen der Führungsschiene anliegt. Dies kann einfach dadurch erreicht werden, daß die Führungsbahn in einer von dem Abdeckband überdeckten Vertiefung der Führungsschiene angeordnet ist, welche zwischen den Abdeckbandkontaktzonen ausgebildet ist.

Im Regelfall wird vorgesehen sein, daß die gegenüberliegenden Abdeckbandkontaktzonen Flachseiten-Kontaktzonen umfassen, an denen das Abdeckband auf seiner der Führungsbahn zugewandten Flachseite anliegt. Dabei empfiehlt es sich, daß die Flachseiten-Kontaktzonen von ebenen, zueinander koplanaren Kontaktflächen gebildet sind. Eine flächige dichte Anlage des Abdeckbands an der Führungsschiene ist so möglich.

Es kann aber auch vorgesehen sein, daß mindestens eine Abdeckbandkontaktzone als Schmalseiten-Kontaktzone ausgebildet ist, an welcher das Abdeckband auf einer seiner Schmalseiten anliegt. Insbesondere dann, wenn an der Führungsschiene einander gegenüberliegende Schmalseiten-Kontaktzonen für beide Schmalseiten des Abdeckbands ausgebildet sind, ist sichergestellt, daß das Abdeckband durch die Richtfunktion der Schmalseiten-Kontaktzonen nicht verrutscht und eventuell lokal die Führungsbahn freigibt.

Es sind Einbausituationen der Linearführungseinrichtung denkbar, bei denen das Abdeckband an einer - in Einbaulage - vertikal unteren Seite der Führungsschiene anliegt und dementsprechend die Gefahr besteht, daß es sich, sofern es nicht hinreichend straff gespannt ist, von der Führungsschiene ablöst und das Vordringen von Schmutz zu der Führungsbahn gestattet. Insbesondere, aber nicht ausschließlich für einen solchen Fall ist es zweckmäßig, wenn an der Führungsschiene und/oder an dem Abdeckband Sicherungsmittel vorgesehen sind, welche das Abdeckband außerhalb des Bereichs der Läuferbaugruppe in Abdeckstellung zu der Führungsbahn sichern. Dies kann etwa dadurch erreicht werden, daß das Abdeckband zwischen einander gegenüberliegenden Schmalseiten-Kontaktzonen reibschlüssig einklemmbar ist. Alternativ oder zusätzlich kann das Abdeckband in seiner Abdeckstellung an der Führungsschiene formschlüssig sicherbar sein, etwa in der Weise, daß die Schmalseiten-Kontaktzonen für den Eingriff der Schmalseiten des Abdeckbands hinterschnitten ausgebildet sind. In den Hinterschneidungen der Schmalseiten-Kontaktzonen kann das Abdeckband mit etwas Spiel gehalten sein. Es kann aber auch an seinen Schmalseiten oder/und an seinen Flachseiten eingeklemmt sein. Zur Sicherung des Abdeckbands sind auch Rastmittel denkbar, die nicht über die gesamte Länge der Führungsschiene durchgehen, sondern nur lokal ausgebildet sind und über die Länge der Führungsschiene verteilt sind.

Die Läuferbaugruppe kann in Endbereichen mit Bandkrümmungsmitteln ausgeführt sein, welche dem Abdeckband eine dessen Einlauf zwischen einander gegenüberliegende Schmalseiten-Kontaktzonen erleichternde Zwangskrümmung erteilen und dadurch den Abstand zwischen den Schmalseiten des Abdeckbands verringern. Das Krümmen des Abdeckbands kann hilfreich sein, um es mit seinen Längsrändern leicht in Hinterschneidungen der Führungsschiene einführen zu können. Dabei ist es möglich, daß sich das Abdeckband nach dem Einführen in die Hinterschneidungen wieder vollständig entkrümmt. Wenn hingegen eine reibschlüssige Einklemmung des Abdeckbands an dessen Schmalseiten erwünscht ist, empfiehlt es sich, die Breite des Abdeckbands derart auf die Sicherungsmittel abzustimmen, daß das Abdeckband in Abdeckstellung eine Vorkrümmung besitzt.

Die Sicherungsmittel können nach einer weiteren Variante auch dadurch realisiert sein, daß das Abdeckband durch Magnetmittel in Abdeckstellung haltbar ist.

Bevorzugt ist vorgesehen, daß die Führungsbahn und die Abdeckbandkontaktzone gemeinsam an einem grundmaterialeinheitlichen Schienenkörper der Führungsschiene ausgebildet sind, wobei der Schienenkörper im Bereich der Führungsbahn oder/und der Abdeckbandkontaktzone durchaus nachträglichen Härtungs- oder/und Beschichtungsvorgängen unterzogen werden kann, etwa um die Führungsschiene zu vergüten und ihre Belastbarkeit zu verbessern. Insbesondere können die Führungsbahn und die Abdeckbandkontaktzone an dem stofflich integral zusammenhängenden Schienenkörper angeordnet sein, obwohl es grundsätzlich nicht ausgeschlossen ist, daß die Führungsbahn und die Abdeckbandkontaktzone an grundmaterialgleichen, jedoch separaten Schienenteilkörpern ausgebildet sind.

Häufig weist die Führungsschiene nicht nur eine Führungsbahn, sondern zwei oder mehrere Führungsbahnen auf. Für diesen Fall empfiehlt es sich, daß die Führungsschiene mindestens zwei zueinander parallel verlaufende Führungsbahnen aufweist, die gemeinsam durch das Abdeckband abgedeckt sind.

Die Erfindung ist insbesondere bei Führungsschienen anwendbar, die eine Befestigungsfläche, eine der Befestigungsfläche gegenüberliegende Kopffläche sowie zwei die Befestigungsfläche mit der Kopffläche verbindende Seitenflächen aufweisen, wobei in jeder der Seitenflächen mindestens je eine Führungsbahn ausgebildet ist und an jeder Seitenfläche mindestens je ein Abdeckband für die zugehörige mindestens eine Führungsbahn vorgesehen ist. Dabei ist es besonders günstig, wenn bei Vorhandensein von jeweils mindestens zwei Führungsbahnen in jeder der Seitenflächen sämtliche Führungsbahnen jeder der Seitenflächen durch je ein gemeinsames Abdeckband abgedeckt sind.

Das Abdeckband kann einen metallischen Werkstoff, insbesondere Stahl, umfassen. Es kann auch ein Kunststoffmaterial umfassen. Dabei soll nicht ausgeschlossen sein, daß das Abdeckband aus verschiedenen Werkstoffen hergestellt ist, etwa mit einem metallischen Kern, der für die gewünschte Festigkeit sorgt, und einer Ummantelung aus Kunststoff oder Gummi, die für eine gute Abdichtung zwischen Abdeckband und Führungsschiene sorgt.

Die Erfindung eignet sich grundsätzlich für alle Arten der Führung der Läuferbaugruppe auf der Führungsschiene. So kann die Läuferbaugruppe auf der als Gleitbahn ausgebildeten Führungsbahn gleitend geführt sein. Ebenso kann die Läuferbaugruppe auf der als Wälzbahn ausgebildeten Führungsbahn wälzgeführt sein. Im letzteren Fall ist es möglich, daß die Läuferbaugruppe durch mindestens eine drehbar an ihr gelagerte Laufrolle auf der Wälzbahn geführt ist. Möglich ist aber auch, daß die Läuferbaugruppe durch mindestens eine Reihe von längs eines endlosen Umlaufwegs umlaufenden Wälzkörpern auf der Wälzbahn geführt ist.

Das Abdeckband kann an der Läuferbaugruppe zur gemeinsamen Bewegung mit dieser längs der Längsachse befestigt sein. Es kann im Bereich der Schienenenden an Umlenkmitteln umgelenkt sein und durch einen rücklaufenden Bandabschnitt zu einer Schleife geschlossen sein. Grundsätzlich denkbar sind auch zwei jeweils im Bereich der Schienenenden befindliche Aufwickelrollen, von denen das Abdeckband abgewickelt oder auf sie aufgewickelt wird, je nach der Bewegungsrichtung der Läuferbaugruppe. Das Abdeckband kann sogar eine Längselastizität besitzen.

Eine bevorzugte Ausführungsform sieht vor, daß das Abdeckband auf seiner führungsbahnzugewandten Flachseite schleifend über eine Stützflächenanordnung der Läuferbaugruppe hinwegläuft und daß die Läuferbaugruppe Annäherungsmittel umfaßt, welche das Abdeckband in Längsrichtung vor und hinter der Stützflächenanordnung in Annäherung an die Führungsschiene halten. Obwohl es grundsätzlich denkbar ist, daß zwei auf gegenüberliegenden Seiten der Führungsschiene angeordnete Führungsbahnen durch eine geschlossene und gegenüber der Führungsschiene stationäre Abdeckbandschleife abgedeckt sind, ist bevorzugt vorgesehen, daß das Abdeckband freie Bandenden aufweist, die an den in Längsrichtung beabstandeten Schienenenden der Führungsschiene gehalten sind. Dabei empfiehlt es sich, daß mindestens eines der Bandenden in einem Verankerungsblock verankerbar ist, welcher sich an einer axialen Stirnfläche des zugehörigen Schienenendes abstützt, da so eine zusätzliche Bearbeitung der Führungsschiene vermeidbar ist. Zweckmäßigerweise werden in dem Verankerungsblock zwei an gegenüberliegenden Seitenflächen der Führungsschiene angeordnete Abdeckbänder verankerbar sein.

Montageerleichternd ist eine Lösung, bei der der Verankerungsblock axial auf das zugehörige Schienenende aufsteckbar ist und hierzu mindestens einen axialen Steckerteil aufweist, mit dem er die Führungsschiene an ihrem Außenumfang axial übergreift.

Bevorzugt ist das Abdeckband durch Spannmittel spannbar, welche im Bereich mindestens eines Schienenendes angeordnet sind. Dabei kann vorgesehen sein, daß die Spannmittel justierbare Spannkomponenten umfassen. Ferner kann vorgesehen sein, daß die Spannmittel mindestens eine federelastische Spannkomponente umfassen. Eine Federvorspannung kann bei temperaturbedingten Längenänderungen des Abdeckbands für einen Ausgleich sorgen. Zudem kann sie, falls einmal Stick-Slip-Effekte zwischen dem Abdeckband und der Läuferbaugruppe auftreten, ruckartige Zugkräfte an dem Abdeckband vermeiden.

Bei einer bevorzugten Ausführungsform umfaßt die Läuferbaugruppe einen für ihre Führung auf der Führungsschiene verantwortlichen Läufer, wobei die Annäherungsmittel an mindestens einer an dem Läufer anbringbaren Bandführungseinheit angeordnet sind. Für den Läufer kann ein handelsübliches Serienbauteil verwendet werden, das zur Bildung der Läuferbaugruppe im wesentlichen modifikationsfrei übernommen werden kann. Dies gilt insbesondere dann, wenn auch die Stützflächenanordnung mindestens zum Teil, insbesondere vollständig, an der mindestens einen Bandführungseinheit angeordnet ist. Montagetechnisch günstig ist es, wenn dem Zusammenbau des Läufers dienende Befestigungsorgane auch zur Anbringung der Bandführungseinheit ausgeführt sind. Beispielsweise können Befestigungsschrauben, die der Befestigung von Kopfeinheiten des Läufers an einem Hauptkörper des Läufers dienen, mit einem Zusatzgewinde versehen sein, welches der nachträglichen Anbringung der Bandführungseinheit an dem vormontierten Läufer dient.

Zweckmäßigerweise wird an axial gegenüberliegenden Endflächen des Läufers je eine Bandführungseinheit angebracht sein. Diese können - bei Betrachtung in Richtung axial von dem Läufer weg - eine mit zunehmendem Abstand von dem Läufer sich verschlankende Außenkontur besitzen, so daß sich ein gefälliges Äußeres der Läuferbaugruppe ergibt.

Das Abdeckband wird zweckmäßigerweise außen an dem Läufer vorbeigeführt sein. Es empfiehlt sich dann, das Abdeckband durch einen an der mindestens einen Bandführungseinheit angebrachten Schutzbügel vor Beschädigung zu schützen.

Zur Herabsetzung der Reibung zwischen dem Abdeckband und den Annäherungsmitteln sowie der Stützflächenanordnung kann die Läuferbaugruppe mindestens einen Schmiermittelspender für die Schmierung des Abdeckbands tragen. Dieser Schmiermittelspender kann einen schmiermittelhaltigen Schmierkörper umfassen, welcher in Schmierkontakt mit dem Abdeckband steht. Der Schmierkörper kann zugleich in Schmierkontakt mit mindestens einer durch das Abdeckband abgedeckten Führungsbahn stehen. Geeigneterweise wird dieser Schmierkörper in einer Bandführungseinheit angeordnet sein, die zudem in der Weise ausgestaltet werden kann, daß in ihr außerdem eine Schmiermittelvorratskammer untergebracht ist, welche in Versorgungsverbindung mit dem mindestens einen Schmierkörper steht. Der Schmierkörper kann wenigstens einen Teil der Bandführungsfunktion der Bandführungseinheit übernehmen.

Die Erfindung wird im folgenden anhand der beigefügten Zeichnungen näher erläutert. Es stellen dar:
- Fig. 1: ein Ausführungsbeispiel der erfindungsgemäßen Linearführungseinrichtung in perspektivischer Darstellung,
- Fig. 2: einen Schnitt längs der Linie II-II der Fig. 1,
- Fig. 3: einen Schnitt längs der Linie III-III der Fig. 1,
- Fig. 4: eine Variante der Fig. 3,
- Fig. 5: einen vergrößerten Ausschnitt der Fig. 3 bei einer weiteren Variante,
- Fig. 6: eine perspektivische Explosionsdarstellung einer Bandführungseinheit mit zwei Abdeckbändern,
- Fig. 7: eine teilweise geschnittene Ansicht der Linearführungseinrichtung der Fig. 1 von oben,
- Fig. 8: einen Ausschnitt einer in Fig. 7 zu erkennenden Bandführungseinheit,
- Fig. 9: eine Variante der Fig. 8,
- Fig. 10: einen Klemm-Mechanismus für Abdeckbandenden,
- Fig. 11: stark schematisch ein abgewandeltes Ausführungsbeispiel der erfindungsgemäßen Linearführungseinrichtung und
- Fig. 12: eine weitere Variante der Fig. 3 in vergrößerter Darstellung.

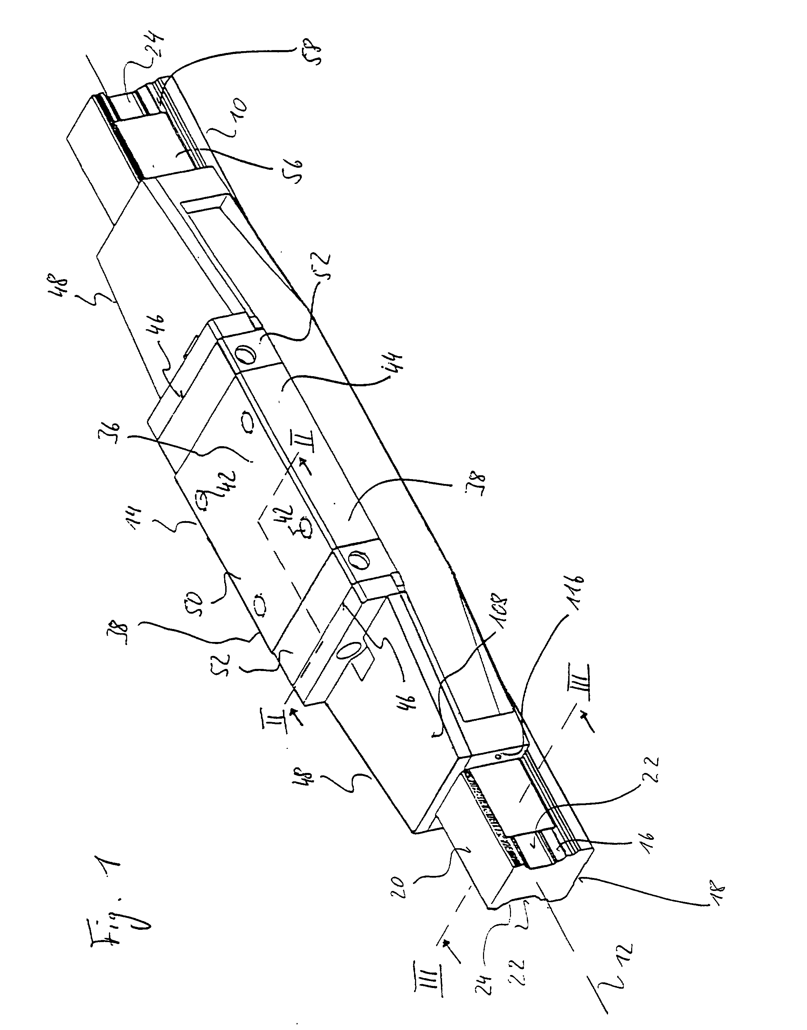

In Fig. 1 erkennt man eine auf einer nicht näher dargestellten Basis befestigbare Führungsschiene 10, auf der in Richtung einer Schienenlängsachse 12 eine Läuferbaugruppe 14 verschiebbar geführt ist. Die Läuferbaugruppe 14 ist an im Querschnitt teilkreisförmig gewölbten Kugellaufbahnen 16 der Führungsschiene 10 unter Vermittlung mehrerer Kugelschleifen geführt. Die Führungsschiene 10 besitzt eine Befestigungsfläche 18, mit der sie auf die Basis aufgesetzt wird, eine Kopffläche 20 sowie zwei gegenüberliegende Seitenflächen 22, in denen jeweils eine annähernd trapezförmige Nut 24 ausgebildet ist, in deren Nutflanken die Kugellaufbahnen 16 eingearbeitet sind. Jede Seitenfläche 22 der Führungsschiene 10 weist somit zwei Kugellaufbahnen 16 auf. Den insgesamt vier Kugellaufbahnen 16 entsprechend sind in der Läuferbaugruppe 14 vier endlose Kugelschleifen untergebracht, die an je einer der Kugellaufbahnen 16 abrollen. Die in Fig. 1 gezeigte Linearführungseinrichtung ist zu einer die Achse 12 enthaltenden Längsmittelebene symmetrisch aufgebaut.

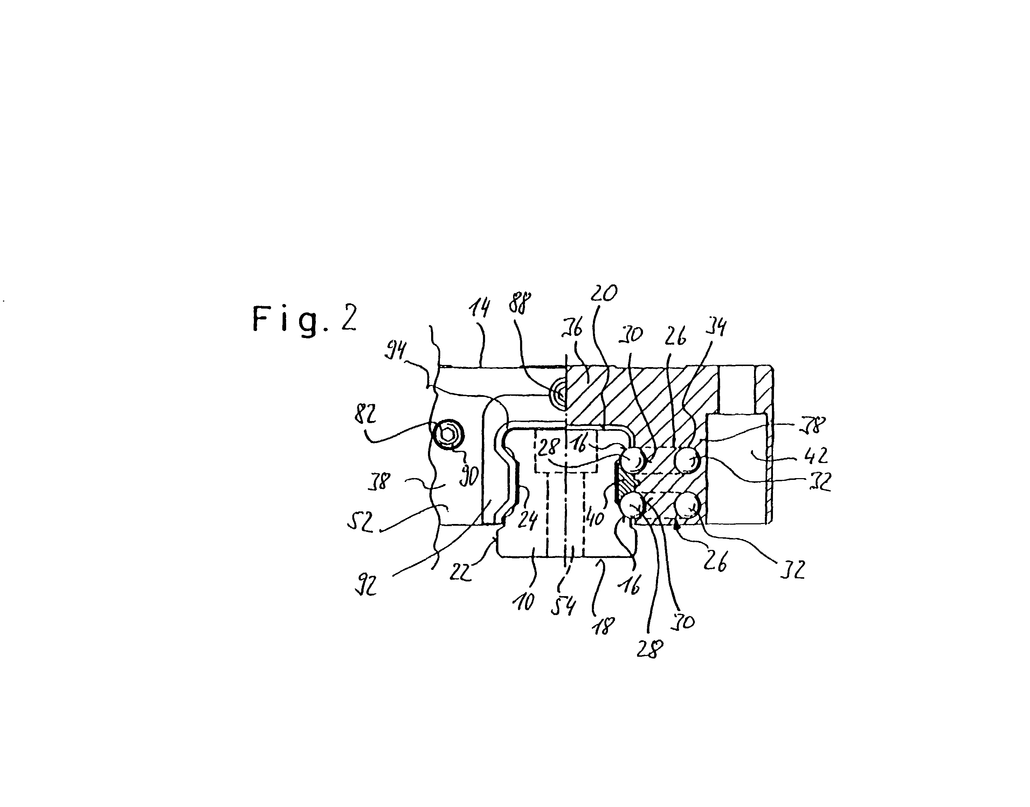

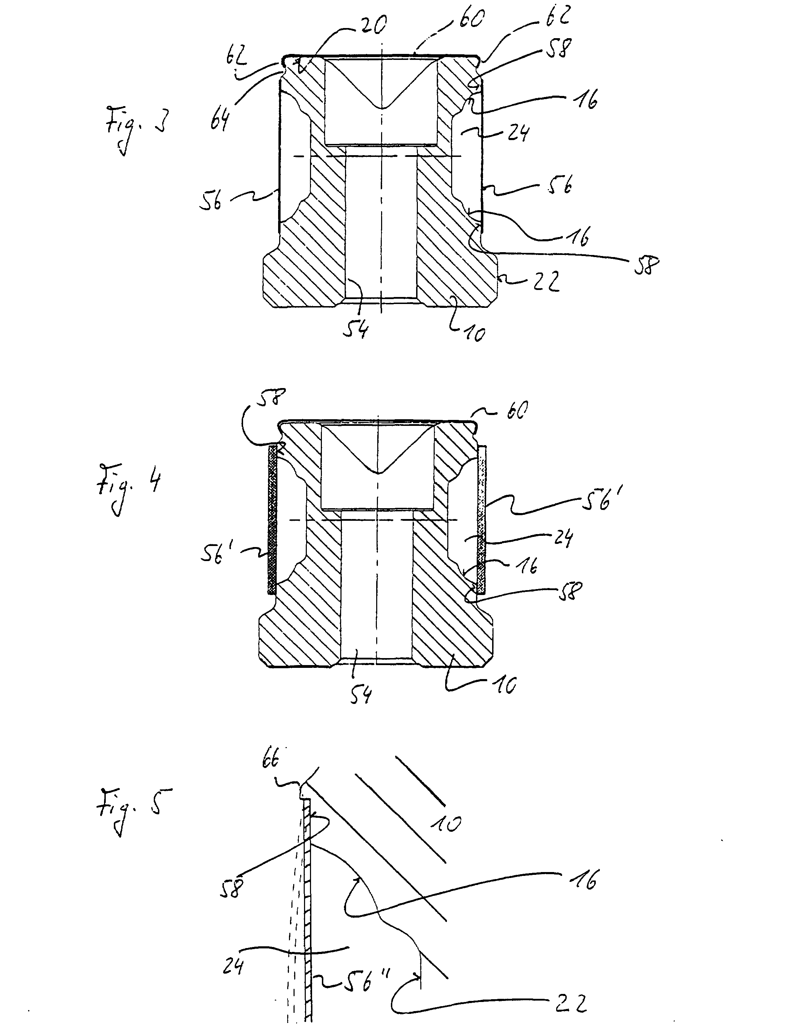

Es wird nun zusätzlich auf Fig. 2 verwiesen. Dort sind zwei der angesprochenen vier Kugelschleifen zu erkennen. Sie sind allgemein mit 26 bezeichnet. Jede der Kugelschleifen 26 umfaßt eine lastübertragende geradlinige Kugelreihe 28, die in rollendem Eingriff mit einer der führungsschienenseitigen Kugellaufbahnen 16 und mit einer an der Läuferbaugruppe 14 ausgebildeten tragenden Kugellaufbahn 30 steht. Ferner umfaßt jede Kugelschleife 26 eine rücklaufende geradlinige Kugelreihe 32, die in einem zugehörigen Rücklaufkanal 34 der Läuferbaugruppe 14 geführt ist. Die lastübertragende Kugelreihe 28 und die rücklaufende Kugelreihe 32 jeder Kugelschleife 26 sind an ihren beiden Enden jeweils durch eine in Fig. 2 nicht näher dargestellte Bogenkugelreihe verbunden, die in Umlenkführungen der Läuferbaugruppe 14 geführt sind.

Die Läuferbaugruppe 14 umgreift die Führungsschiene 10 U-förmig, wobei sie mit einem Stegbereich 36 der Kopffläche 20 der Führungsschiene 10 benachbart ist und mit Schenkelbereichen 38 je einer der Seitenflächen 22 der Führungsschiene 10 gegenüberliegt. Auf der der Führungsschiene 10 zugewandten Innenseite ist an jedem der Schenkelbereiche 38 eine Halteleiste 40 angeordnet, welche die Kugeln der lastübertragenden Kugelreihen 28 an der Läuferbaugruppe hält, so daß sie bei Abnahme der Läuferbaugruppe 14 von der Führungsschiene 10 nicht verloren gehen. In den Schenkelbereichen 38 sind zudem Aufnahmelöcher 42 für Befestigungsbolzen vorgesehen, die der Befestigung eines zu bewegenden Objekts, etwa eines Tragtisches, der auf verschiedenen Führungsschienen geführte Läuferbaugruppen übergreift, oder eines Werkzeug- oder Werkstückhalters, auf der Läuferbaugruppe 14 dienen.

Die Läuferbaugruppe 14 umfaßt einen die eigentliche Führungsfunktion übernehmenden Läufer 44 sowie zwei an je einer der in Achsrichtung 12 gegenüberliegenden Endflächen 46 des Läufers 44 befestigte Bandführungseinheiten 48, deren Funktion weiter unten erläutert wird. Der Läufer 44 setzt sich zusammen aus einem Läuferhauptkörper 50, der die Rücklaufkanäle 34 für die rücklaufenden Kugelreihen 32 enthält und an seinen der Führungsschiene 10 zugewandten Schenkelinnenseiten mit den geradlinigen tragenden Kugellaufbahnen 30 für die lastübertragenden Kugelreihen 28 ausgeführt ist. An den beiden in Achsrichtung 12 gegenüberliegenden Enden des Läuferhauptkörpers 50 ist je eine im wesentlichen konturgleiche Kopfeinheit 52 angebracht, in der mindestens zum Teil die Umlenkführungen für die Bogenkugelreihen untergebracht sind. Die Kugelschleifen 26 und ihr zugehöriges Laufbahnsystem sind vollständig in dem Läufer 44 untergebracht. Die Bandführungseinheiten 48 sind für die Führung der Läuferbaugruppe 14 auf der Führungsschiene 10 in der Regel von untergeordneter Bedeutung. Ohne wesentliche Modifikationen können so handelsübliche, vormontierte Läufer verwendet werden. Es versteht sich, daß statt zweier Kugelschleifen 26 in jedem Schenkelbereich 38 der Läuferbaugruppe 14 auch nur eine oder drei oder sogar noch mehr Kugelschleifen 26 vorgesehen sein können. Ebenso macht es im Rahmen der Erfindung keinen Unterschied, wenn statt der Kugeln andere Wälzkörper zur Anwendung kommen, etwa Rollen, Tonnen oder Nadeln.

In regelmäßigen Abständen längs der Längsachse 12 sind in der Führungsschiene 10 Bolzenaufnahmelöcher 54 vorgesehen, welche von der Kopffläche 20 zur Befestigungsfläche 18 durchgehen. In die Bolzenaufnahmelöcher 54 können Befestigungsbolzen eingesetzt werden, die der Verschraubung der Führungsschiene 10 mit der Basis dienen.

Es ist wichtig, die Kugellaufbahnen 16 vor Verunreinigungen, seien dies heiße Späne, seien dies Schmutzpartikel, die sich mit an der Führungsschiene 10 anhaftendem Schmiermittel zu einem stark abrasivem Gemisch vermengen können, zu schützen, um die Führungspräzision und eine leichtgängige Beweglichkeit der Läuferbaugruppe 14 auf der Führungsschiene 10 zu erhalten. Hierzu sind die beiden in jeder der Seitenflächen 22 der Führungsschiene 10 vorgesehenen Kugellaufbahnen 16 paarweise durch ein gemeinsames Abdeckband 56 abgedeckt, dessen freie Bandenden in den Endbereichen der Führungsschiene 10 befestigt sind. Das Abdeckband 56 liegt an der Führungsschiene 10 auf deren gesamter Länge gegen Eindringen von Schmutz dicht an, mit Ausnahme des Bereichs der Läuferbaugruppe 14, wo es außen an dem Läufer 44 vorbeigeführt ist und von den Bandführungseinheiten 48 am vorderen und am hinteren Ende der Läuferbaugruppe 14 wieder an die Führungsschiene 10 angedrückt wird. Bei einer Längsbewegung der Läuferbaugruppe 14 schleift diese somit an dem Abdeckband 56 entlang, wobei der Begriff "schleifen" im Sinne eines reibungs- und verschleißarmen Gleitens zu verstehen ist.

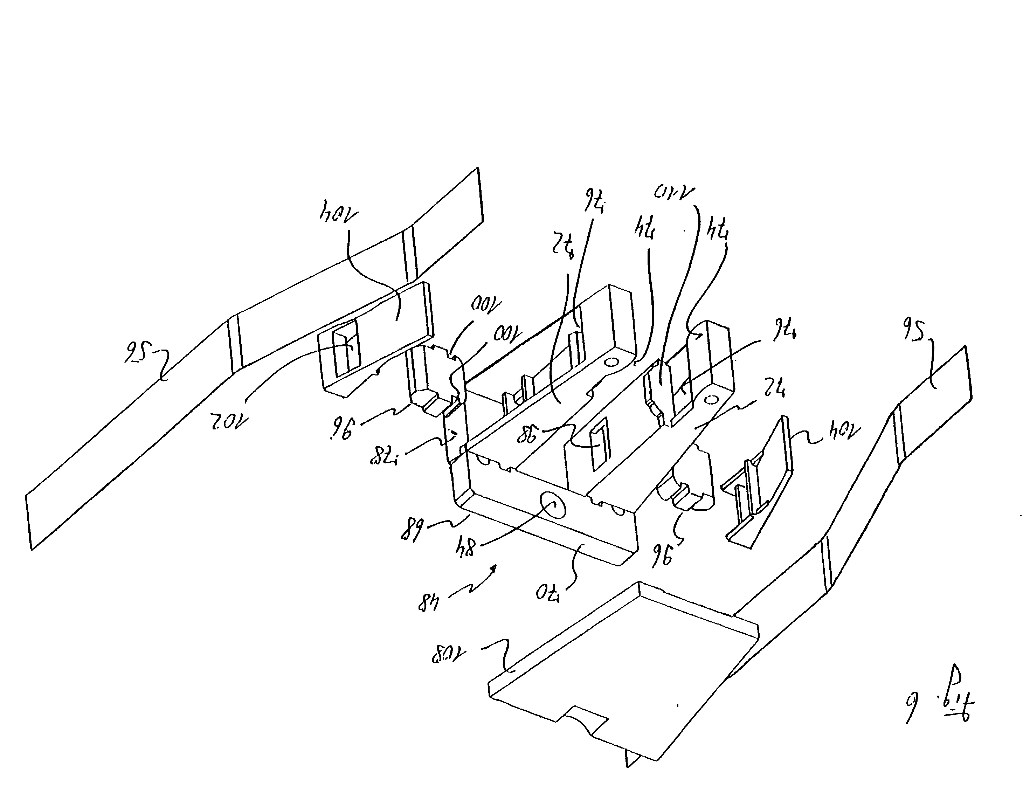

Es wird nun auf die Fig. 3 - 5 verwiesen. In Fig. 3 sind die beiden beidseits der Führungsschiene 10 angeordneten Abdeckbänder 56 als Metall-, insbesondere Federstahlbänder, ausgebildet. Jedes der Abdeckbänder 56 überdeckt die in der jeweiligen Seitenfläche 22 der Führungsschiene 10 ausgebildete Trapeznut 24 vollständig und liegt mit seinen seitlichen Längsrändern flachseitig an koplanaren Kontaktflächen 58 der Führungsschiene 10 an. Diese Kontaktflächen 58, auf denen das jeweilige Abdeckband 56 aufliegt, grenzen unmittelbar an die Kugellaufbahnen 16 an, die in den äußersten Randbereichen der Nutflanken der Trapeznut 24 angeordnet sind. Falls die Führungsschiene 10 aus einem metallischen Werkstoff, insbesondere Stahl, gefertigt ist, kann durch eine Magnetisierung der Abdeckbänder 56 ein sicherer Halt an der Führungsschiene 10 erreicht werden. Es versteht sich, daß insbesondere bei einer abweichenden Profilgestaltung der Führungsschiene 10 die Kugellaufbahnen 16 auch einzeln durch je ein Abdeckband 56 abgedeckt sein können. Ebenso versteht es sich, daß in jeder der Seitenflächen 22 der Führungsschiene 10 mehr als zwei Kugellaufbahnen ausgebildet sein können, die alle durch ein gemeinsames Abdeckband 56 abgedeckt sind. In jedem Fall sind die Kugellaufbahnen 16 und die Kontaktflächen 58 an einem aus einem einheitlichen Grundmaterial bestehenden Schienenkörper der Führungsschiene 10 ausgebildet. Damit ist gemeint, daß es denkbar ist, zur Herstellung der Führungsschiene 10 ein stranggezogenes Stahlprofil im Bereich der Kugellaufbahnen 16 mit einer speziellen, besonders harten Beschichtung zu versehen, die sich nicht bis in den Bereich der Kontaktflächen 58 erstreckt. Dennoch wären in diesem Fall die Kugellaufbahnen 16 und die Kontaktflächen 58 an ein und demselben Grundmaterial, nämlich dem Stahlprofil, ausgebildet. Auch eine induktive Härtung der Seitenflächenbereiche der Führungsschiene 10 würde daran nichts ändern. Ebenso könnte die Führungsschiene 10 im Bereich der Kontaktflächen 58 mit einer die Dichtwirkung erhöhenden Beschichtung, beispielsweise einer Gummierung, versehen sein, ohne daß sich hierdurch das Grundmaterial ändert, an dem die Kugellaufbahnen 16 und die Kontaktflächen 58 ausgebildet sind. Schließlich soll auch nicht ausgeschlossen sein, daß die Führungsschiene 10 aus mehreren Schienenteilkörpern aufgebaut ist.

Ein Kopfflächen-Abdeckband 60 ist auf die Kopffläche 20 der Führungsschiene 10 aufgeclipst und greift mit spitzwinkelig umgebogenen Seitenrändern 62 in je eine Ausnehmung 64 ein, die kopfflächennah in jeder der Seitenflächen 22 ausgebildet ist. Das Kopfflächen-Abdeckband 60 schafft eine glatte Oberfläche über den in die Bolzenaufnahmelöcher 54 eingesetzten Befestigungsbolzen, an der die Läuferbaugruppe 14 abgedichtet entlangfahren kann.

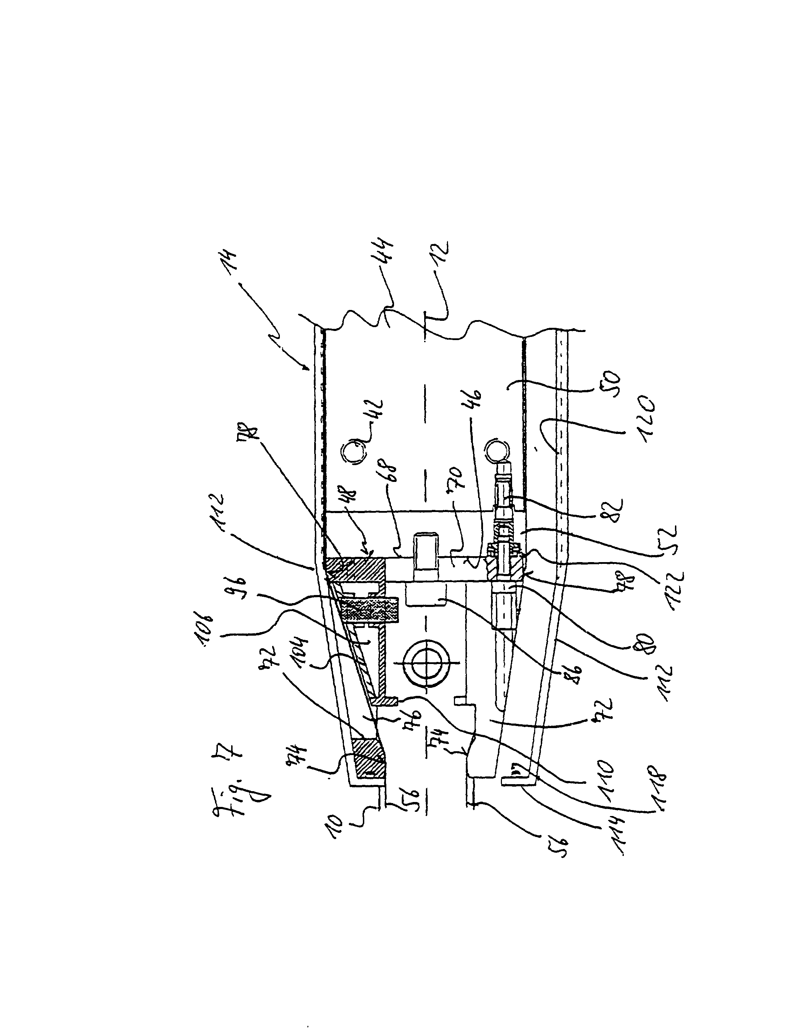

Bei der Variante der Fig. 4 sind statt der Stahlbänder 56 Kunststoffbänder 56' vorgesehen. Im übrigen unterscheidet sie sich nicht von der Ausführungsform der Fig. 3. Statt reiner Metall- oder Kunststoffbänder sind auch Verbundmaterialbänder, beispielsweise aus kunststoffbeschichtetem Metall, denkbar. Auch Gummi- oder Textilbänder sind abhängig vom Einsatzort der Linearführungseinrichtung nicht ausgeschlossen.

Die Variante der Fig. 5 zeigt ein Abdeckband 56", das nicht nur auf seiner kugellaufbahnzugewandten Flachseite an der Führungsschiene 10 anliegt, nämlich im Bereich der Kontaktflächen 58, sondern auch mit seinen Schmalseiten an der Führungsschiene 10 anliegt. Hierzu sind die Kontaktflächen 58 seitlich durch je eine Richtschulter 66 begrenzt, an die das Abdeckband 56" mit einer seiner Schmalseiten anstößt. Durch die Richtschultern 66 ist das Abdeckband 56" gegen Verrutschen quer zur Führungsschiene 10 gesichert.

Die Richtschultern 66 können zur reibschlüssigen Sicherung des Abdeckbands 56" an der Führungsschiene 10 ausgenutzt werden. Die Breite des Abdeckbands 56" ist hierzu etwas größer als der Abstand der beiden gegenüberliegenden Richtschultern 66 (von denen in Fig. 5 nur eine zu erkennen ist). Wenn das Abdeckband 56" an seinen Längsrändern leicht zusammengedrückt wird, krümmt es sich, so daß es zwischen die gegenüberliegenden Richtschultern 66 eingelegt werden kann. Wird es anschließend losgelassen, hat es die Tendenz, sich wieder flachzulegen. Weil es jedoch breiter ist als der Abstand zwischen den gegenüberliegenden Richtschultern 66, behält es eine geringe Krümmung. Diese entspricht einer Krümmungsvorspannung, unter deren Wirkung das Abdeckband 56" gegen die Richtschultern 66 gedrückt wird, mit der Folge, daß sich ein Reibsitz des Abdeckbands 56" in der durch die Richtschultern 66 gebildeten Nut einstellt. Diese Situation ist gestrichelt in Fig. 5 eingezeichnet. Es versteht sich, daß in diesem Fall eine plane Anlage des Abdeckbands 56" an den Kontaktflächen 58 nicht gegeben sein muß. Vielmehr kann es sich ohne weiteres ausschließlich mit seinen Schmalseiten an der Führungsschiene 10, konkret an den Richtschultern 66, abstützen.

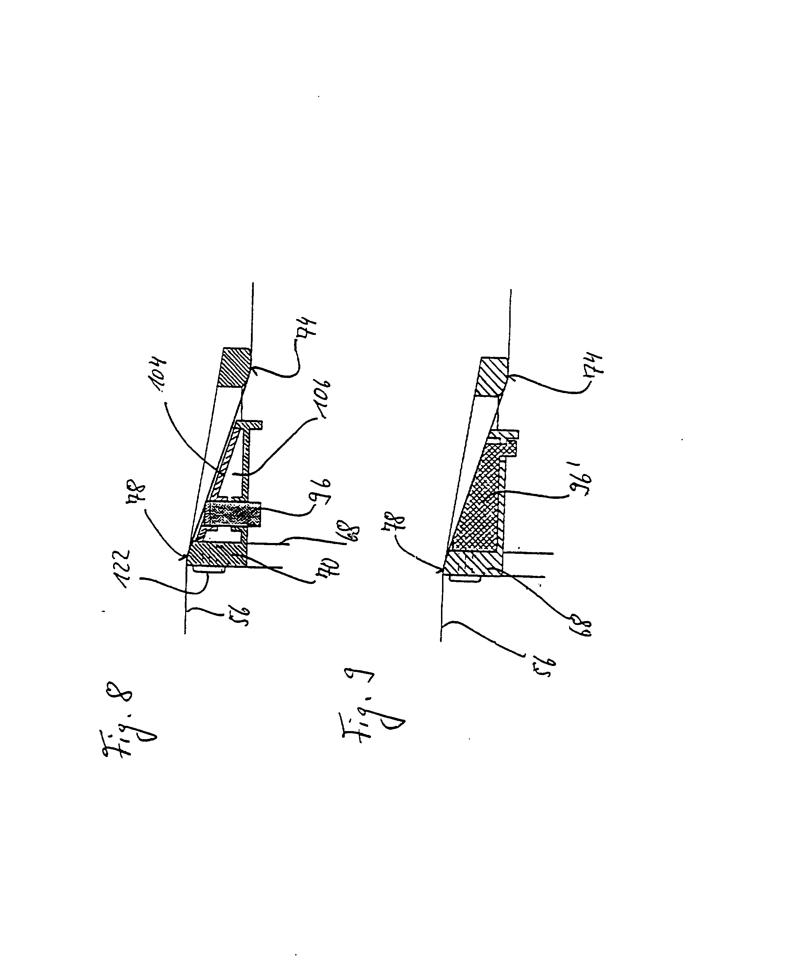

Es wird nun auf Fig. 6 verwiesen. Man erkennt, daß die dort gezeigte Bandführungseinheit einen Bandführungskörper 68 umfaßt, der ein U-Plattenteil 70 aufweist, von dessen U-Schenkeln den Schienenseitenflächen 22 gegenüberliegende axiale Plattenfortsätze 72 ausgehen. Die Plattenfortsätze 72 können einstückig mit dem Plattenteil 70, etwa als Spritzgußteil aus Kunststoff, hergestellt sein. Sie können auch gesondert von dem Plattenteil 70 hergestellt sein und mit diesem beispielsweise durch Steckverbindungsmittel verbindbar sein. Jeder der Plattenfortsätze 72 weist an seiner der Schienenseitenfläche 22 zugekehrten Innenseite eine konvex gewölbte Andrückfläche 74 auf, welche zum Andrücken des Abdeckbands 56 an die Führungsschiene 10 dient. In Richtung zu dem Plattenteil 70 hin ist nach der Andrückfläche 74 eine Durchtrittsöffnung 76 in jedem der Plattenfortsätze 72 ausgebildet, welche den Durchtritt des Abdeckbands 56 zur schienenabgewandten Außenseite des jeweiligen Plattenfortsatzes 72 gestattet. Schließlich ist an den Schenkelaußenseiten des Plattenteils 70 je eine ebenfalls leicht konvex gekrümmte Abhebestützfläche 78 ausgebildet, durch die das Abdeckband 56 von der Führungsschiene 10 abgehoben und an dem Läufer 44 vorbeigeführt wird.

Soll das Abdeckband 56, wie im Zusammenhang mit Fig. 5 erläutert, zunächst gekrümmt werden, bevor es zwischen gegenüberliegende Richtschultern eingesetzt wird, so kann dies beispielsweise durch eine geeignete Formgebung der Andrückflächen 74 erreicht werden. Hierzu können diese mit einer Wölbung um eine zur Bandlängsrichtung parallele Wölbungsachse hergestellt werden, wobei diese Wölbung konvex oder konkav sein kann. Dem Abdeckband 56 wird so an den Andrückflächen 74 die gewünschte Bandkrümmung erteilt, die es leichtgängig zwischen die Richtschultern 66 der Fig. 5 einlaufen läßt.

Fig. 7 zeigt den Verlauf, der den beidseits der Führungsschiene 10 angeordneten Abdeckbändern 56 durch den Bandführungskörper 68 erteilt wird. Die Abdeckbänder 56 werden jeweils durch die Abhebestützfläche 78 aus dem Anlagekontakt mit der Führungsschiene 10 herausgehoben und laufen mit geringem Abstand an dem Läufer 44 vorbei, so daß sie nicht an diesem schleifen. In Fig. 7 erkennt man ferner die Art der Befestigung des Bandführungskörpers 68 an dem Läufer 44. Diese erfolgt mittels Schraubbolzen 80, die axial durch das Plattenteil 70 hindurch jeweils in ein Innengewinde eingeschraubt werden, das im Kopf einer Befestigungsschraube 82 ausgebildet ist, die ihrerseits dazu dient, die Kopfeinheit 52 mit dem Läuferhauptkörper 50 zu verschrauben. Hierdurch ist eine problemlose Nachrüstung herkömmlicher Läufer mit den Bandführungseinheiten 48 möglich. Es müssen nämlich lediglich die gewöhnlich vorhandenen Befestigungsschrauben, mit denen die Kopfeinheiten 52 an dem Läuferhauptkörper 50 befestigt sind, gegen solche Befestigungsschrauben 82 ausgetauscht werden, die das spätere Einschrauben der Schraubbolzen 80 erlauben, soweit dies nicht serienmäßig schon erfolgt ist, etwa zur Anbringung von Abstreifern oder anderer Vorsatzelemente.

In der Mitte seines Stegbereichs weist das Plattenteil 70 zudem ein Durchgangsloch 84 (siehe Fig. 6) auf, durch das hindurch ein in dem Läufer 44 ausgebildetes Schmiermittelversorgungssystem zur Versorgung von dessen Kugelschleifen mit Schmiermittel von außen zugänglich ist. In das Durchgangsloch 84 kann ein Verschlußstopfen 86 (siehe Fig. 7) eingesetzt werden. Alternativ kann ein Schmiernippel eingesetzt werden. Denkbar ist es auch, daß in einer dem Durchgangsloch 84 gegenüberliegenden Schmieranschlußbohrung der zugehörigen Kopfeinheit 52 bereits ein solcher Schmiernippel eingesetzt ist und das Durchgangsloch 84 lediglich den Zugang zu dem Schmiernippel ermöglicht. Fig. 2 zeigt diesen Fall, bei dem die Kopfeinheit 52 in ihrem Stegbereich mit einem Schmiernippel 88 ausgeführt ist. Man erkennt zudem eine der Befestigungsschrauben 82 mit einem schematisch angedeuteten Innengewinde 90. Außerdem erkennt man eine in die Kopfeinheit 52 bündig eingesetzte Dichtplatte 92 mit einer der Außenkontur der Führungsschiene 10 angepaßten und dicht an dieser anliegenden Dichtlippenanordnung 94.

Es wird nun wieder auf die Fig. 6 und 7 verwiesen. In jedem der Plattenfortsätze 72 ist ein Schmierkörper 96 untergebracht, über den einerseits das Abdeckband mit seiner schienenzugewandten Flachseite hinwegläuft und der andererseits in Schmierkontakt mit den beiden Kugellaufbahnen 16 der jeweiligen Seitenfläche 22 der Führungsschiene 10 steht. Die Schmierung der Abdeckbänder 56 mindert deren reibungsbedingten Verschleiß. Es versteht sich, daß die Abdeckbänder 56 auch auf ihrer schienenabgewandten Flachseite durch die Schmierkörper 96 oder hiervon gesonderte weitere Schmierkörper mit Schmierstoff benetzt werden können, um auch die Reibung an den Andrückflächen 74 herabzusetzen. Die Schmierkörper 96 ragen jeweils aus einem Fenster 98 der Plattenfortsätze 72 zur Führungsschiene 10 hin vor und sind mit Rastaussparungen 100 an den Fensterrändern gehalten. Zu den Abdeckbändern 56 hin ragen sie jeweils durch ein Fenster 102 vor, das in einer Verschlußkappe 104 ausgebildet ist, die von der schienenfernen Seite her auf den jeweiligen Plattenfortsatz 72 aufsetzbar ist. Wie der oberen Hälfte der Fig. 7 zu entnehmen ist, begrenzen die Plattenfortsätze 72 mit ihren Verschlußkappen 104 jeweils einen internen Hohlraum 106, der als Schmiermittelvorratskammer genutzt werden kann. Wenn die Schmierkörper 96 von saugfähigen, durch Kapillarwirkung leitenden Materialien gebildet sind, etwa aus Filz oder Schaumstoff, können sich bei Bevorratung einer Ölmenge in den Hohlräumen 106 die mit diesen Hohlräumen 106 in Verbindung stehenden Schmierkörper 96 selbständig mit Ölnachschub versorgen, so daß stets eine gleichmäßige Schmierölabgabe an die Abdeckbänder 56 und die Kugellaufbahnen 16 gewährleistet ist. Zur Abdichtung der Hohlräume 106 können die Verschlußkappen 104 unlösbar mit den Plattenfortsätzen 72 verklebt oder verschweißt werden, wobei in diesem Fall die in den Schmierkörpern 96 und ggf. in den Hohlräumen 106 gespeicherte Schmiermittelmenge auf die Lebensdauer der Linearführungseinrichtung abgestimmt sein wird, sofern nicht ein zusätzlicher Nachschmieranschluß an dem Bandführungskörper 68 vorgesehen ist. Alternativ können die Verschlußkappen 104 von den Plattenfortsätzen 72 lösbar sein, wobei dann zweckmäßigerweise eine zusätzliche Dichtlippenanordnung an den Verschlußkappen 104 oder/und den Plattenfortsätzen 72 ausgebildet ist, um für eine perfekte Abdichtung der Hohlräume 106 zu sorgen.

Von oben her ist ein Deckel 108 auf die Plattenfortsätze 72 aufsetzbar, der für eine Kapselung der jeweiligen Bandführungseinheit 48 sorgt. An der schienenzugewandten Innenseite der Plattenfortsätze 72 kann zudem ein wenigstens annähernd der Seitenflächenkontur der Führungsschiene 10 nachgebildeter Stegvorsprung 110 angeformt sein, der als Grobabstreifer zum Abstreifen etwaiger auf der Führungsschiene 10 verbliebener grober Verunreinigungen dienen kann. Es soll jedoch nicht ausgeschlossen sein, daß die Stegvorsprünge 110 in Dichteingriff mit den Seitenflächen 22 der Führungsschiene 10, insbesondere mit den Kugellaufbahnen 16, stehen, so daß das von den Schmierkörpern 96 an die Führungsschiene 10 abgegebene Schmiermittel innerhalb der Läuferbaugruppe 14 verbleibt. Materialmäßig können der Bandführungskörper 68, die Verschlußkappen 104 und der Deckel 108 aus spritzbarem Kunststoff hergestellt sein. Zum Schutz vor heißen Spänen und aggressiven Medien können sie aber auch aus Zink-Druckguß gefertigt sein.

In Fig. 1 läuft das Abdeckband 56 freiliegend außen an dem Läufer 44 vorbei. Um es vor Beschädigungen zu schützen und die Kapselung der Läuferbaugruppe 14 zu verbessern, sind in Fig. 7 Schutzbügel 112 gezeigt, die seitlich auf die Läuferbaugruppe 14 aufgesetzt werden und mit abgewinkelten Bügelenden 114 an den axialen Endflächen der Bandführungseinheiten 48 schnappend eingerastet werden. Hierzu sind in den Plattenfortsätzen 72 Rastaussparungen 116 (vgl. Fig. 1) ausgebildet, in die entsprechende Schnappzapfen 118 (siehe Fig. 7) der Schutzbügel 112 eingreifen. Die Schutzbügel 112 decken die Abdeckbänder 56 im Bereich der Läuferbaugruppe 14 vollständig ab. Entlang des Läufers 44 weisen sie auf ihrer läuferzugewandten Innenseite eine Ausnehmung 120 (gestrichelt in Fig. 7 angedeutet) auf, in der das jeweilige Abdeckband 56 läuft.

In den Fig. 1 und 7 erkennt man ferner, daß sich die Bandführungseinheiten 48 mit zunehmender Entfernung vom Läufer 44 verschlanken, so daß der durch die Bandführungseinheiten 48 beanspruchte Bauraum gering gehalten werden kann.

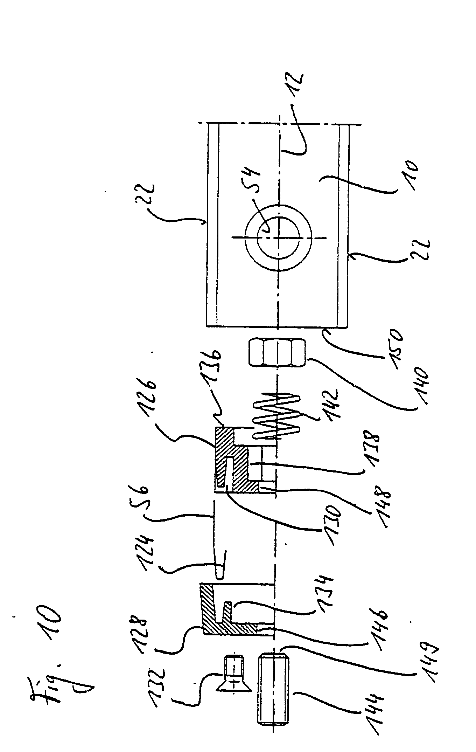

In Fig. 8, die im wesentlichen einen Ausschnitt der Fig. 7 zeigt, erkennt man zusätzlich, daß der Bandführungskörper 68 an der läuferzugewandten Anlageseite des Plattenteils 70, mit der das letztere an der Stirnfläche 46 des Läufers 44 zur Anlage kommt, einen oder mehrere Positionierringe 122 aufweist, die der Positionierung des Bandführungskörpers 68 relativ zu dem Läufer 44 dienen und in zugeordnete Aussparungen (nicht näher dargestellt) eingreifen, welche in der jeweiligen Stirnfläche 46 des Läufers 14 ausgebildet sind. Insbesondere können die Positionierringe 122 in Ausnehmungen in der Stirnfläche 46 eingreifen, in welche auch die der Montage des Läufers 44 dienenden Befestigungsschrauben 82 eingesetzt werden. Dies erkennt man andeutungsweise in Fig. 7.

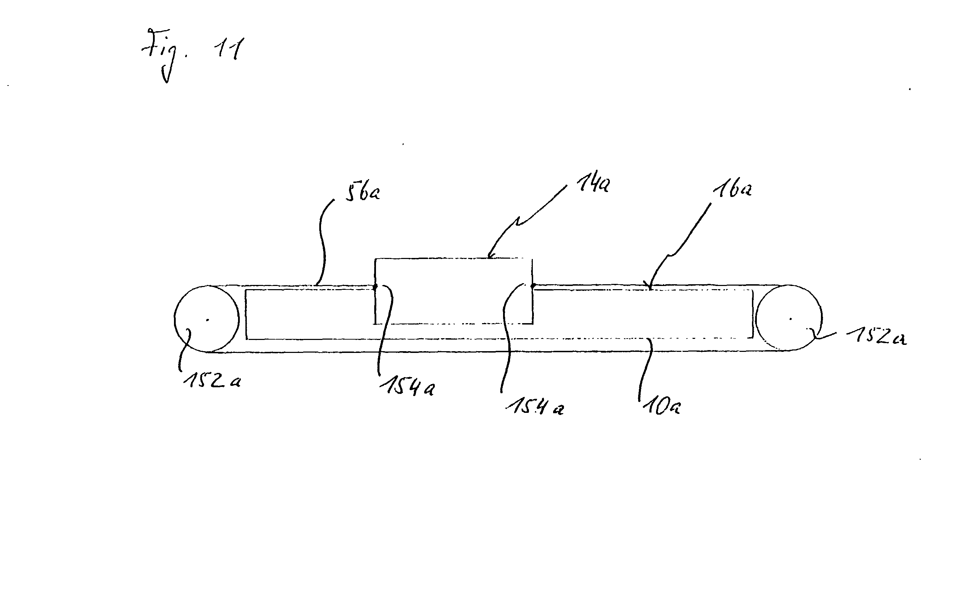

Fig. 9 zeigt eine Variante der Fig. 8 mit einem anders gestalteten Schmierkörper 96'. Während das Abdeckband 56 in Fig. 8 im wesentlichen nur über eine Schmierkante des Schmierkörpers 96 läuft, steht der Schmierkörper 96' in Fig. 9 in großflächigem Schmierkontakt mit dem Abdeckband 56. Für das Material des Schmierkörpers 96' kann ein mit Schmiermittel vermischtes Polymer verwendet werden, also ein Material, das als Grundstoff ein Polymer enthält, dem bei der Herstellung Schmiereigenschaften besitzende Komponenten beigemischt wurden. Die Schmiermittelabgabe kann durch Druck- oder Wärmeeinwirkung auf den Schmierkörper 96' erfolgen.

Fig. 10 zeigt die Befestigung der Enden des Abdeckbands 56 an der Führungsschiene 10. Man erkennt ein hakenförmig umgebogenes Bandende 124, das zwischen einem Klemmunterteil 126 und einem Klemmoberteil 128 einklemmbar ist. Das Abdeckband 56 wird mit seinem Hakenende 124 in eine Hakenaufnahme 130 des Klemmunterteils 126 eingehängt. Sodann wird das Klemmoberteil 128 mittels Schrauben 132 auf das Klemmunterteil 126 aufgeschraubt. Dabei greift das Klemmoberteil 128 mit einem Sicherungsvorsprung 134 in die Hakenaufnahme 130 des Klemmunterteils 126 ein und sichert das Hakenende 124 des Abdeckbands 56. Zur Montage wird das Klemmunterteil 126, ggf. zusammen mit dem angeschraubten Klemmoberteil 128, auf das Führungsschienenende aufgesteckt. Aufgesteckt ist hier in dem Sinne gemeint, daß an dem Klemmunterteil 126 axiale Steckervorsprünge 136 ausgebildet sind, die in die Trapeznuten 24 (in Fig. 10 nicht gezeigt) der beiden Seitenflächen 22 der Führungsschiene 10 vorzugsweise formschlüssig eingreifen und eine Verdrehung des Klemmunterteils 126 relativ zur Führungsschiene 10 um die Längsachse 12 verhindern. Die Steckervorsprünge 136 greifen jedoch nicht im Preßsitz, sondern vergleichsweise locker in die Trapeznuten 24 ein, so daß das Klemmunterteil 126 längs der Führungsschiene 10 verschiebbar ist. Diese Verschiebbarkeit ermöglicht es, die Abdeckbänder 56 zu spannen.

Das Klemmunterteil 126 weist auf seiner schienenzugewandten Axialseite eine polygonale Ausnehmung 138 zur formschlüssigen, also verdrehsicheren Aufnahme einer Gewindemutter 140 auf. Zwischen die Mutter 140 und das Klemmunterteil 126 wird in die Ausnehmung 138 zusätzlich eine Vorspannfeder 142 eingelegt. Ein Justierbolzen 144 wird sodann durch Durchtrittsöffnungen 146 und 148 des Klemmoberteils 128 bzw. des Klemmunterteils 126 hindurch in die Gewindemutter 140 eingeschraubt, und zwar soweit, daß er aus der Gewindemutter 140 herausschaut und sich mit einem Stützende 149 an einer axialen Stirnfläche 150 der Führungsschiene 10 abstützt. Durch Justierung des Justierbolzens 144 kann eine Grundvorspannung der in dem Klemmblock 126,128 fixierten Abdeckbänder 56 eingestellt werden, die durch eine von der Vorspannfeder 142 aufgebrachte Federvorspannung überlagert wird. Die hierdurch erreichte federnde Verlagerbarkeit des Klemmblocks 126,128 ist insbesondere bei vergleichsweise ruckartigen Bewegungen der Läuferbaugruppe 14 vorteilhaft, falls zu Bewegungsbeginn die Läuferbaugruppe 14 versucht, die Abdeckbänder 56 mitzuziehen. Die Feder 142 ermöglicht hier einen Ausgleich. Vorzugsweise ist an beiden Schienenenden ein federnder Klemm-Mechanismus angebracht, wie er in Fig. 10 dargestellt ist. Selbstverständlich können die Abdeckbänder 56 auch ohne Federvorspannung an den Schienenenden fixiert werden. Eine justierbare Spannungseinstellung ist insofern nützlich, als sie zum einen die Montage des Klemm-Mechanismus erleichtert (der Klemmblock 126, 128 kann zunächst bei spannungslosen Abdeckbändern 56 auf die Führungsschiene 10 aufgesteckt werden; die Bandspannung wird erst durch nachträgliches Einschrauben des Justierbolzens 144 aufgebracht) und zum anderen ein Nachspannen der Abdeckbänder 56 möglich ist, sollten diese nach einiger Betriebszeit erschlaffen.

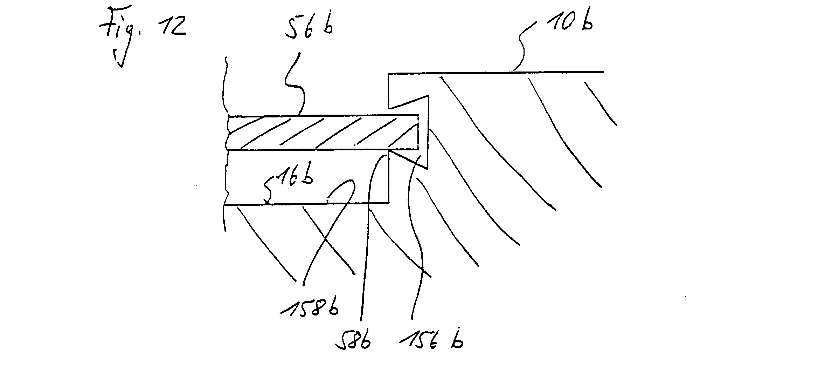

In Fig. 11 und 12 sind gleiche oder gleichwirkende Komponenten in den Fig. 1 - 10 mit gleichen Bezugszeichen versehen, jedoch ergänzt um einen Kleinbuchstaben. Zur näheren Erläuterung wird auf die vorangehende Beschreibung der Fig. 1 - 10 verwiesen.

Bei der Abwandlung gemäß Fig. 11 ist eine Läuferbaugruppe 14a auf einer Führungsschiene 10a längsverschieblich geführt. Dies kann wiederum eine Wälzführung sein. Alternativ kann die Läuferbaugruppe 14a gleitend auf der Führungsschiene 10 geführt sein. Eine Führungsbahn 16a der Führungsschiene 10a ist durch ein Abdeckband 56a abgedeckt. Dieses ist jedoch nicht an den Schienenenden fixiert, sondern zu einer Schleife geschlossen, wobei es im Bereich der Schienenenden an drehbar gelagerten Umlenkrollen 152a umgelenkt und auf einer der Führungsbahn 16a gegenüberliegenden Seite der Führungsschiene 10a zurückgeführt ist. An Festpunkten 154a ist das Abdeckband 56a mit der Läuferbaugruppe 14a verbunden. Dies bedeutet, daß sich das Abdeckband 56a bei einer Längsbewegung der Läuferbaugruppe 14a mitbewegt.

Bei der Abwandlung der Fig. 12 ist ein Abdeckband 56b mit seinen Längsrändern in je einer an einer Führungsschiene 10b ausgebildeten, im Querschnitt trapezförmigen Schwalbenschwanznut 156b aufgenommen. Die Schwalbenschwanznut 156b ist in einer Nutflanke einer Schienennut 158b hinterschnitten ausgebildet, in der sich eine von dem Abdeckband 56b überdeckte Führungsbahn 16b befindet. Bei der Darstellung der Fig. 12 ist das Abdeckband 56b locker in der Schwalbenschwanznut 156b gehalten. Dies bedeutet, daß es weder mit seinen Flachseiten, noch mit seinen Schmalseiten an der Führungsschiene 10b eingeklemmt ist. Es liegt lediglich auf einem als Flachseiten-Kontaktzone dienenden Nutrand 58b der Schwalbenschwanznut 156b lose auf. Es versteht sich jedoch, daß sowohl eine flachseitige Einklemmung des Abdeckbands 56b zwischen den gegenüberliegenden Nuträndern 58b der Schwalbenschwanznut 156b denkbar ist, als auch eine schmalseitige Einklemmung zwischen den Bodenflächen zweier gegenüberliegender Schwalbenschwanznuten 156b. Zum Einsetzen des Abdeckbands 56b in die Schwalbenschwanznut 156b ist es wiederum zweckmäßig, das Abdeckband 56b mittels geeigneter Krümmungserteilungsmittel an den Bandführungseinheiten zu krümmen. Sofern das Abdeckband 56b schmalseitig Spiel in der Schwalbenschwanznut 156b hat, kann es sich anschließend wieder vollständig flachlegen.

## Patentansprüche

1. Linearführungseinrichtung, umfassend
- eine Führungsschiene (10) mit einer Längsachse (12) und mindestens einer Führungsbahn (16) und
- eine an der mindestens einen Führungsbahn (16) in Richtung der Längsachse (12) geführte Läuferbaugruppe (14),
**dadurch gekennzeichnet, daß** die Führungsbahn (16) in Richtung der Längsachse (12) beidseits der Läuferbaugruppe (14) im wesentlichen über die jeweilige gesamte befahrbare Restlänge durch ein Abdeckband (56) abgedeckt ist, welches an mindestens einer Abdeckbandkontaktzone (58) der Führungsschiene (10) anliegt oder dieser Abdeckbandkontaktzone (58) naheliegt.

2. Linearführungseinrichtung nach Anspruch 1, **dadurch gekennzeichnet, daß** die Abdeckbandkontaktzone und die Führungsbahn mindestens teilweise übereinstimmen.

3. Linearführungseinrichtung nach Anspruch 1, **dadurch gekennzeichnet, daß** die Abdeckbandkontaktzone (58) und die Führungsbahn (16) mindestens teilweise verschieden sind.

4. Linearführungseinrichtung nach Anspruch 3, **dadurch gekennzeichnet, daß** das Abdeckband (56) die Führungsbahn (16) berührungslos abdeckt und an quer zur Längsachse beidseits der Führungsbahn (16) gelegenen Abdeckbandkontaktzonen (58) der Führungsschiene (10) anliegt.

5. Linearführungseinrichtung nach Anspruch 4, **dadurch gekennzeichnet, daß** die Führungsbahn (16) in einer von dem Abdeckband (56) überdeckten Vertiefung (24) der Führungsschiene (10) angeordnet ist, welche zwischen den Abdeckbandkontaktzonen (58) ausgebildet ist.

6. Linearführungseinrichtung nach Anspruch 4 oder 5, **dadurch gekennzeichnet, daß** die Abdeckbandkontaktzonen (58) Flachseiten-Kontaktzonen (58) umfassen, an denen das Abdeckband (56) mit einer der Führungsbahn (16) zugewandten Flachseite anliegt.

7. Linearführungseinrichtung nach Anspruch 6, **dadurch gekennzeichnet, daß** die Flachseiten-Kontaktzonen (58) von ebenen, zueinander koplanaren Kontaktflächen gebildet sind.

8. Linearführungseinrichtung nach einem der Ansprüche 1 bis 7, **dadurch gekennzeichnet, daß** mindestens eine Abdeckbandkontaktzone als Schmalseiten-Kontaktzone (bei 66) ausgebildet ist, an welcher das Abdeckband (56) mit einer seiner Schmalseiten anliegt.

9. Linearführungseinrichtung nach Anspruch 8, **dadurch gekennzeichnet, daß** an der Führungsschiene (10) einander gegenüberliegende Schmalseiten-Kontaktzonen (bei 66) für beide Schmalseiten des Abdeckbands (56) ausgebildet sind.

10. Linearführungseinrichtung nach einem der Ansprüche 1 bis 9, **dadurch gekennzeichnet, daß** an der Führungsschiene (10) und/oder an dem Abdeckband (56) Sicherungsmittel vorgesehen sind, welche das Abdeckband (56) außerhalb des Bereichs der Läuferbaugruppe (14) in Abdeckstellung zu der Führungsbahn (16) sichern.

11. Linearführungseinrichtung nach Anspruch 10, **dadurch gekennzeichnet, daß** das Abdeckband (56") zwischen einander gegenüberliegenden Schmalseiten-Kontaktzonen (bei 66) reibschlüssig einklemmbar ist.

12. Linearführungseinrichtung nach Anspruch 10 oder 11, **dadurch gekennzeichnet, daß** das Abdeckband (56) in seiner Abdeckstellung an der Führungsschiene (10) formschlüssig sicherbar ist.

13. Linearführungseinrichtung nach Anspruch 12, **dadurch gekennzeichnet, daß** die Schmalseiten-Kontaktzonen für den Eingriff der Schmalseiten des Abdeckbands hinterschnitten ausgebildet sind.

14. Linearführungseinrichtung nach einem der Ansprüche 10 bis 13, **dadurch gekennzeichnet, daß** die Läuferbaugruppe (14) in Endbereichen mit Bandkrümmungsmitteln ausgeführt ist, welche dem Abdeckband (56") eine dessen Einlauf zwischen einander gegenüberliegenden Schmalseiten-Kontaktzonen (bei 66) erleichternde Zwangskrümmung erteilen und dadurch den Abstand zwischen den Schmalseiten des Abdeckbands (56") verringern.

15. Linearführungseinrichtung nach Anspruch 14, **dadurch gekennzeichnet, daß** die Breite des Abdeckbands derart auf die Sicherungsmittel abgestimmt ist, daß das Abdeckband in Abdeckstellung eine Vorkrümmung besitzt.

16. Linearführungseinrichtung nach einem der Ansprüche 10 bis 15, **dadurch gekennzeichnet, daß** das Abdeckband durch Magnetmittel in Abdeckstellung haltbar ist.

17. Linearführungseinrichtung nach einem der Ansprüche 1 bis 17, **dadurch gekennzeichnet, daß** die Führungsbahn (16) und die Abdeckbandkontaktzone (58) gemeinsam an einem grundmaterialeinheitlichen Schienenkörper der Führungsschiene (10) ausgebildet sind.

18. Linearführungseinrichtung nach einem der Ansprüche 1 bis 17, **dadurch gekennzeichnet, daß** die Führungsbahn (16) und die Abdeckbandkontaktzone (58) an einem stofflich integral zusammenhängenden Schienenkörper angeordnet sind.

19. Linearführungseinrichtung nach einem der Ansprüche 1 bis 18, **dadurch gekennzeichnet, daß** die Führungsschiene (10) mindestens zwei zueinander parallel verlaufende Führungsbahnen (16) aufweist, die gemeinsam durch das Abdeckband (56) abgedeckt sind.

20. Linearführungseinrichtung nach einem der Ansprüche 1 bis 19, **dadurch gekennzeichnet, daß** die Führungsschiene (10) eine Befestigungsfläche (18), eine der Befestigungsfläche (18) gegenüberliegende Kopffläche (20) sowie zwei die Befestigungsfläche (18) mit der Kopffläche (20) verbindende Seitenflächen (22) aufweist, daß in jeder der Seitenflächen (22) mindestens je eine Führungsbahn (16) ausgebildet ist und daß an jeder Seitenfläche (22) mindestens je ein Abdeckband (56) für die zugehörige mindestens eine Führungsbahn (16) vorgesehen ist.

21. Linearführungseinrichtung nach Anspruch 20, **dadurch gekennzeichnet, daß** bei Vorhandensein von jeweils mindestens zwei Führungsbahnen (16) in jeder der Seitenflächen (22) sämtliche Führungsbahnen (16) jeder der Seitenflächen (22) durch je ein gemeinsames Abdeckband (56) abgedeckt sind.

22. Linearführungseinrichtung nach einem der Ansprüche 1 bis 21, **dadurch gekennzeichnet, daß** das Abdeckband (56) einen metallischen Werkstoff, insbesondere Stahl, umfaßt.

23. Linearführungseinrichtung nach einem der Ansprüche 1 bis 22, **dadurch gekennzeichnet, daß** das Abdeckband (56') ein Kunststoffmaterial umfaßt.

24. Linearführungseinrichtung nach einem der Ansprüche 1 bis 23, **dadurch gekennzeichnet, daß** die Läuferbaugruppe auf der als Gleitbahn ausgebildeten Führungsbahn gleitend geführt ist.

25. Linearführungseinrichtung nach einem der Ansprüche 1 bis 24, **dadurch gekennzeichnet, daß** die Läuferbaugruppe (14) auf der als Wälzbahn ausgebildeten Führungsbahn (16) unter Vermittlung mindestens eines Wälzkörpers (26) geführt ist.

26. Linearführungseinrichtung nach Anspruch 25, **dadurch gekennzeichnet, daß** die Läuferbaugruppe durch mindestens eine drehbar an ihr gelagerte Laufrolle auf der Wälzbahn geführt ist.

27. Linearführungseinrichtung nach Anspruch 25, **dadurch gekennzeichnet, daß** die Läuferbaugruppe (14) durch mindestens eine Reihe von längs eines endlosen Umlaufwegs umlaufenden Wälzkörpern (26) auf der Wälzbahn (16) geführt ist.

28. Linearführungseinrichtung nach einem der Ansprüche 1 bis 27, **dadurch gekennzeichnet, daß** das Abdeckband (56a) an der Läuferbaugruppe (14a) zur gemeinsamen Bewegung mit dieser längs der Längsachse befestigt ist.

29. Linearführungseinrichtung nach einem der Ansprüche 1 bis 27, **dadurch gekennzeichnet, daß** das Abdeckband (56) auf seiner führungsbahnzugewandten Flachseite schleifend über eine Stützflächenanordnung (78) der Läuferbaugruppe (14) hinwegläuft und daß die Läuferbaugruppe (14) Annäherungsmittel (74) umfaßt, welche das Abdeckband (56) in Längsrichtung vor und hinter der Stützflächenanordnung (78) in Annäherung an die Führungsschiene (10) halten.

30. Linearführungseinrichtung nach Anspruch 29, **dadurch gekennzeichnet, daß** das Abdeckband (56) freie Bandenden (124) aufweist, die an den in Längsrichtung beabstandeten Schienenendbereichen der Führungsschiene (10) gehalten sind.

31. Linearführungseinrichtung nach Anspruch 30, **dadurch gekennzeichnet, daß** mindestens eines der Bandenden (124) in einem Verankerungsblock (126,128) verankerbar ist, welcher sich an einer axialen Stirnfläche (150) des zugehörigen Schienenendes abstützt.

32. Linearführungseinrichtung nach Anspruch 31, **dadurch gekennzeichnet, daß** in dem Verankerungsblock (126, 128) zwei an gegenüberliegenden Seitenflächen (22) der Führungsschiene (10) angeordnete Abdeckbänder (56) verankerbar sind.

33. Linearführungseinrichtung nach Anspruch 31 oder 32, **dadurch gekennzeichnet, daß** der Verankerungsblock (126,128) axial auf das zugehörige Schienenende aufsteckbar ist und hierzu mindestens einen axialen Steckerteil (136) aufweist, mit dem er die Führungsschiene (10) an ihrem Außenumfang axial übergreift.

34. Linearführungseinrichtung nach einem der Ansprüche 30 bis 33, **dadurch gekennzeichnet, daß** das Abdeckband (56) durch Spannmittel (140,142,144) spannbar ist, welche im Bereich mindestens eines Schienenendes angeordnet sind.

35. Linearführungseinrichtung nach Anspruch 34, **dadurch gekennzeichnet, daß** die Spannmittel (140,142,144) justierbare Spannkomponenten (140,144) umfassen.

36. Linearführungseinrichtung nach Anspruch 34 oder 35, **dadurch gekennzeichnet, daß** die Spannmittel (140,142,144) mindestens eine federelastische Spannkomponente (142) umfassen.

37. Linearführungseinrichtung nach einem der Ansprüche 29 bis 36, **dadurch gekennzeichnet, daß** die Läuferbaugruppe (14) einen für ihre Führung auf der Führungsschiene (10) verantwortlichen Läufer (44) umfaßt und daß die Annäherungsmittel (74) an mindestens einer an dem Läufer (44) anbringbaren Bandführungseinheit (48) angeordnet sind.

38. Linearführungseinrichtung nach Anspruch 37, **dadurch gekennzeichnet, daß** auch die Stützflächenanordnung (78) mindestens zum Teil, insbesondere vollständig, an der mindestens einen Bandführungseinheit (48) angeordnet ist.

39. Linearführungseinrichtung nach Anspruch 37 oder 38, **dadurch gekennzeichnet, daß** dem Zusammenbau des Läufers (44) dienende Befestigungsorgane (82) auch zur Anbringung der Bandführungseinheit (48) ausgeführt sind.

40. Linearführungseinrichtung nach Anspruch 39, **dadurch gekennzeichnet, daß** Befestigungsschrauben (82), die der Befestigung von Kopfeinheiten (52) des Läufers (44) an einem Hauptkörper (50) des Läufers (44) dienen, mit einem Zusatzgewinde (90) versehen sind, welches der nachträglichen Anbringung der Bandführungseinheit (48) an dem vormontierten Läufer (44) dient.

41. Linearführungseinrichtung nach einem der Ansprüche 37 bis 40, **dadurch gekennzeichnet, daß** an axial gegenüberliegenden Endflächen (46) des Läufers (44) je eine Bandführungseinheit (48) angebracht ist.

42. Linearführungseinrichtung nach Anspruch 41, **dadurch gekennzeichnet, daß** die Bandführungseinheiten (48) bei Betrachtung in Richtung axial von dem Läufer (44) weg eine mit zunehmendem Abstand von dem Läufer (44) schlanker werdende Außenkontur besitzen.

43. Linearführungseinrichtung nach einem der Ansprüche 37 bis 42, **dadurch gekennzeichnet, daß** das Abdeckband (56) außen an dem Läufer (44) vorbeigeführt ist und durch einen an der mindestens einen Bandführungseinheit (48) angebrachten Schutzbügel (112) geschützt ist.

44. Linearführungseinrichtung nach einem der Ansprüche 1 bis 43, **dadurch gekennzeichnet, daß** die Läuferbaugruppe (14) mindestens einen Schmiermittelspender (96) für die Schmierung des Abdeckbands (56) trägt.

45. Linearführungseinrichtung nach Anspruch 44, **dadurch gekennzeichnet, daß** der Schmiermittelspender einen schmiermittelhaltigen Schmierkörper (96) umfaßt, welcher in Schmierkontakt mit dem Abdeckband (56) steht.

46. Linearführungseinrichtung nach Anspruch 45, **dadurch gekennzeichnet, daß** der Schmierkörper (96) zugleich in Schmierkontakt mit mindestens einer durch das Abdeckband (56) abgedeckten Führungsbahn (16) steht.

47. Linearführungseinrichtung nach Anspruch 45 oder 46, **dadurch gekennzeichnet, daß** der Schmierkörper (96) in einer Bandführungseinheit (48) angeordnet ist und gewünschtenfalls wenigstens einen Teil der Bandführungsfunktion der Bandführungseinheit übernimmt.

48. Linearführungseinrichtung nach Anspruch 47, **dadurch gekennzeichnet, daß** in der Bandführungseinheit (48) eine Schmiermittelvorratskammer (106) untergebracht ist, welche in Versorgungsverbindung mit dem mindestens einen Schmierkörper (96) steht.

## Claims

1. Linear guide device, comprising
- a guide rail (10) with a longitudinal axis (12) and at least one guideway (16), and
- a runner assembly (14) guided at the guideway (16), of which there is at least one, in the direction of the longitudinal axis (12),
**characterised in that** the guideway (16) is covered in the direction of the longitudinal axis (12) on both sides of the runner assembly (14) substantially over the respective entire usable remaining length by a cover strip (56) which lies against at least one cover strip contact zone (58) of the guide rail (10) or which lies close to this cover strip contact zone (58).

2. Linear guide device according to Claim 1,
**characterised in that** the cover strip contact zone and the guideway correspond, at least in part.

3. Linear guide device according to Claim 1,
**characterised in that** the cover strip contact zone (58) and the guideway (16) differ, at least in part.

4. Linear guide device according to Claim 3,
**characterised in that** the cover strip (56) covers the guideway (16) in contact-free fashion and lies against cover strip contact zones (58) of the guide rail (10) which are located transversely to the longitudinal axis on both sides of the guideway (16).

5. Linear guide device according to Claim 4,
**characterised in that** the guideway (16) is disposed in a depression (24) in the guide rail (10) which is covered by the cover strip (56) and is formed between the cover strip contact zones (58).

6. Linear guide device according to Claim 4 or 5,
**characterised in that** the cover strip contact zones (58) comprise large-side contact zones (58) against which the cover strip (56) lies by way of a large side which faces the guideway (16).

7. Linear guide device according to Claim 6,
**characterised in that** the large-side contact zones (58) are formed by plane, coplanar contact faces.

8. Linear guide device according to any one of Claims 1 to 7,
**characterised in that** at least one cover strip contact zone is formed as a narrow-side contact zone (at 66) against which the cover strip (56) lies by way of its narrow sides.

9. Linear guide device according to Claim 8,
**characterised in that** mutually opposite narrow-side contact zones (at 66) are formed at the guide rail (10) for both narrow sides of the cover strip (56).

10. Linear guide device according to any one of Claims 1 to 9,
**characterised in that** securing means are provided at the guide rail (10) and/or at the cover strip (56) which secure the cover strip (56) to the guideway (16) outside of the region of the runner assembly (14) in the covering position.

11. Linear guide device according to Claim 10,
**characterised in that** the cover strip (56") can be frictionally clamped between mutually opposite narrow-side contact zones (at 66).

12. Linear guide device according to Claim 10 or 11,
**characterised in that** the cover strip (56) can be positively secured in its covering position at the guide rail (10).

13. Linear guide device according to Claim 12, **characterised in that** the narrow-side contact zones are undercut for the engagement of the narrow sides of the cover strip.

14. Linear guide device according to any one of Claims 10 to 13,
**characterised in that** the runner assembly (14) is constructed in end regions with strip curvature means which give the cover strip (56") a forced curvature facilitating its entry between mutually opposite narrow-side contact zones (at 66) and therefore reducing the distance between the narrow sides of the cover strip (56"). strip.

15. Linear guide device according to Claim 14,
**characterised in that** the width of the cover strip is adapted to the securing means such that the cover strip is pre-curved in the covering position.

16. Linear guide device according to any one of Claims 10 to 15,
**characterised in that** the cover strip can be retained in the covering position through magnetic means.

17. Linear guide device according to any one of Claims 1 to 17,
**characterised in that** the guideway (16) and the cover strip contact zone (58) are formed together at a rail body of the guide rail (10) which is of a uniform base material.

18. Linear guide device according to any one of Claims 1 to 17,
**characterised in that** the guideway (16) and the cover strip contact zone (58) are disposed at a rail body of an integrally coherent material.

19. Linear guide device according to any one of Claims 1 to 18,
**characterised in that** the guide rail (10) comprises at least two guideways (16) extending parallel to one another and being jointly covered by the cover strip (56).

20. Linear guide device according to any one of Claims 1 to 19,
**characterised in that** the guide rail (10) comprises a fastening face (18), a top face (20) lying opposite the fastening face (18) and two side faces (22) connecting the fastening face (18) to the top face (20), that at least one respective guideway (16) is formed in each of the side faces (22), and that at least one respective cover strip (56) is provided at each side face (22) for the associated guideway (16), of which there is at least one.

21. Linear guide device according to Claim 20,
**characterised in that**, when there are at least two respective guideways (16) in each of the side faces (22), all the guideways (16) of each of the side faces (22) are covered by a respective common cover strip (56).

22. Linear guide device according to any one of Claims 1 to 21,
**characterised in that** the cover strip (56) comprises a metallic material, in particular steel.

23. Linear guide device according to any one of Claims 1 to 22,
**characterised in that** the cover strip (56') comprises a plastics material.

24. Linear guide device according to any one of Claims 1 to 23,
**characterised in that** the runner assembly is guided in sliding fashion on the guideway formed as a slideway.

25. Linear guide device according to any one of Claims 1 to 24,
**characterised in that** the runner assembly (14) is guided on the guideway (16) formed as a rolling track via at least one rolling body (26).

26. Linear guide device according to Claim 25,
**characterised in that** the runner assembly is guided on the rolling track by at least one roller rotatably mounted on the assembly.

27. Linear guide device according to Claim 25,
**characterised in that** the runner assembly (14) is guided on the rolling track (16) by at least one row of rolling bodies (26) circulating along a continuous circulation path.

28. Linear guide device according to any one of Claims 1 to 27,
**characterised in that** the cover strip (56a) is fastened to the runner assembly (14a) to move together with the latter along the longitudinal axis.

29. Linear guide device according to any one of Claims 1 to 27,
**characterised in that** the cover strip (56) runs over a support face arrangement (78) of the runner assembly (14) in sweeping fashion at its large side which faces the guideway, and that the runner assembly (14) comprises approach means (74) which retain the cover strip (56) before and after the support face arrangement (78) in the longitudinal direction close to the guide rail (10).

30. Linear guide device according to Claim 29,
**characterised in that** the cover strip (56) has free strip ends (124) which are retained at the rail end regions, which are spaced apart in the longitudinal direction, of the guide rail (10).

31. Linear guide device according to Claim 30,
**characterised in that** at least one of the strip ends (124) can be anchored in an anchorage block (126, 128) which is supported at an axial front face (150) of the associated rail end.

32. Linear guide device according to Claim 31,
**characterised in that** two cover strips (56) disposed at opposite side faces (22) of the guide rail (10) can be anchored in the anchorage block (126, 128).

33. Linear guide device according to Claim 31 or 32,
**characterised in that** the anchorage block (126, 128) can be fitted axially on the associated rail end and for this purpose comprises at least one axial plug part (136) by which it engages axially over the guide rail (10) at its outer circumference.

34. Linear guide device according to any one of Claims 30 to 33,
**characterised in that** the cover strip (56) can be tensioned by tensioning means (140, 142, 144) which are disposed in the region of at least one rail end.

35. Linear guide device according to Claim 34,
**characterised in that** the tensioning means (140, 142, 144) comprise adjustable tensioning components (140, 144).

36. Linear guide device according to Claim 34 or 35,
**characterised in that** the tensioning means (140, 142, 144) comprise at least one resilient tensioning component (142).

37. Linear guide device according to any one of Claims 29 to 36,
**characterised in that** the runner assembly (14) comprises a runner (44) which is responsible for its guidance on the guide rail (10), and that the approach means (74) are disposed at least at one strip guide unit (48) which can be mounted on the runner (44).

38. Linear guide device according to Claim 37,
**characterised in that** the support face arrangement (78) is also disposed at least in part, in particular entirely, at the strip guide unit (48), of which there is at least one.

39. Linear guide device according to Claim 37 or 38,
**characterised in that** fastening members (82) serving to assemble the runner (44) are also constructed for mounting the strip guide unit (48).

40. Linear guide device according to Claim 39,
**characterised in that** fastening screws (82) which serve to fasten top units (52) of the runner (44) to a main body (50) of the runner (44) are provided with an additional thread (90) serving to subsequently mount the strip guide unit (48) on the pre-mounted runner (44).

41. Linear guide device according to any one of Claims 37 to 40, **characterised in that** a respective strip guide unit (48) is mounted at axially opposite end faces (46) of the runner (44).

42. Linear guide device according to Claim 41, **characterised in that** the strip guide units (48) have an outer contour which - viewed in the axial direction away from the runner (44) - narrows as the distance from the runner (44) increases.

43. Linear guide device according to any one of Claims 37 to 42,
**characterised in that** the cover strip (56) is guided past the runner (44) on the outside and protected against damage by a guard bow (112) which is mounted on the strip guide unit (48), of which there is at least one.

44. Linear guide device according to any one of Claims 1 to 43,
**characterised in that** the runner assembly (14) bears at least one lubricant dispenser (96) for lubricating the cover strip (56).

45. Linear guide device according to Claim 44, **characterised in that** the lubricant dispenser comprises a lubricating body (96) which contains lubricant and is in lubricating contact with the cover strip (56).

46. Linear guide device according to Claim 45, **characterised in that** the lubricating body (96) is at the same time in lubricating contact with at least one guideway (16) covered by the cover strip (56).

47. Linear guide device according to Claim 45 or 46,
**characterised in that** the lubricating body (96) is disposed in a strip guide unit (48) and, if desired, takes over at least a part of the strip guide function of the strip guide unit.

48. Linear guide device according to Claim 47,
**characterised in that** a lubricant reservoir (106) is accommodated in the strip guide unit (48) and is connected for supply purposes to the lubricating body (96), of which there is at least one.

## Revendications

1. Système de guidage linéaire, comprenant
- un rail de guidage (10) avec un axe longitudinal (12) et au moins une glissière de guidage (16) et
- un coulisseau (14) guidé sur la au moins une glissière de guidage (16) en direction de l'axe longitudinal (12),
**caractérisé en ce que** la glissière de guidage (16) est recouverte par une bande de revêtement (56) dans le sens de l'axe longitudinal (12) des deux côtés du coulisseau (14) sensiblement sur toute la longueur résiduelle concernée sur laquelle il peut se déplacer, laquelle bande s'appuie sur au moins une zone de contact de bande de revêtement (58) du rail de guidage (10) ou est disposée à proximité de cette zone de contact de bande de revêtement (58).

2. Système de guidage linéaire selon la revendication 1,
**caractérisé en ce que** la zone de contact de bande de revêtement et la glissière de guidage correspondent au moins partiellement.

3. Système de guidage linéaire selon la revendication 1,
**caractérisé en ce que** la zone de contact de bande de revêtement (58) et la glissière de guidage (16) sont au moins partiellement différentes.

4. Système de guidage linéaire selon la revendication 3,
**caractérisé en ce que** la bande de revêtement (56) recouvre la glissière de guidage (16) sans contact et s'appuie sur des zones de contact de la bande de revêtement (58) du rail de guidage (10) qui sont disposées transversalement à l'axe longitudinal des deux côtés de la glissière de guidage (16).

5. Système de guidage linéaire selon la revendication 4,
**caractérisé en ce que** la glissière de guidage (16) est ménagée dans une cavité (24), recouverte par la bande de revêtement (56), du rail de guidage (10), lequel est réalisé entre les zones de contact de la bande de revêtement (58).

6. Système de guidage linéaire selon la revendication 4 ou 5,
**caractérisé en ce que** les zones de contact de la bande de revêtement (58) comprennent des zones de contact à côté plat (58), sur lesquelles la bande de revêtement (56) s'appuie avec un côté plat tourné vers la glissière de guidage (16).

7. Système de guidage linéaire selon la revendication 6,
**caractérisé en ce que** les zones de contact à côté plat (58) sont formées par des surfaces de contact planes et coplanaires les unes par rapport aux autres.

8. Système de guidage linéaire selon l'une des revendications 1 à 7,
**caractérisé en ce qu'**au moins une zone de contact de bande de revêtement est réalisée sous la forme d'une zone de contact à côtés étroits (en 66), sur laquelle la bande de revêtement (56) s'appuie avec l'un de ces côtés étroits.

9. Système de guidage linéaire selon la revendication 8,
**caractérisé en ce que** des zones de contact à côtés étroits (en 66) se faisant face pour les deux côtés étroits de la bande de revêtement (56) sont réalisées sur le rail de guidage (10).

10. Système de guidage linéaire selon l'une des revendications 1 à 9,
**caractérisé en ce que** sur le rail de guidage (10) et/ou sur la bande de revêtement (56) sont prévus des moyens de blocage qui maintiennent la bande de revêtement (56) à l'extérieur de la zone du coulisseau (14) dans la position de revêtement par rapport à la glissière de guidage (16).

11. Système de guidage linéaire selon la revendication 10, **caractérisé en ce que** la bande de revêtement (56") peut être coincée par frottement entre des zones de contact à côtés étroits se faisant face (en 66).

12. Système de guidage linéaire selon la revendication 10 ou 11,
**caractérisé en ce que** la bande de revêtement (56) peut être bloquée par complémentarité de forme dans sa position de revêtement sur le rail de guidage (10).

13. Système de guidage linéaire selon la revendication 12,
**caractérisé en ce que** les zones de contact à côtés étroits sont réalisées de façon contre-dépouillée pour l'engagement des côtés étroits de la bande de revêtement.

14. Système de guidage linéaire selon l'une des revendications 10 à 13,
**caractérisé en ce que** le coulisseau (14) est réalisé dans des zones d'extrémité avec des moyens de courbure de bande qui donnent à la bande de revêtement (56") une courbure forcée qui facilite son entrée entre des zones de contact à côtés étroits se faisant face (en 66) et réduisent ainsi l'espacement entre les côtés étroits de la bande de revêtement (56").

15. Système de guidage linéaire selon la revendication 14,
**caractérisé en ce que** la largeur de la bande de revêtement est adaptée aux moyens de blocage de telle façon que la bande de revêtement présente une pré-courbure dans la position de revêtement.

16. Système de guidage linéaire selon l'une des revendications 10 à 15,
**caractérisé en ce que** la bande de revêtement peut être maintenue par des moyens magnétiques dans la position de revêtement.

17. Système de guidage linéaire selon l'une des revendications 1 à 17,
**caractérisé en ce que** la glissière de guidage (16) et la zone de contact de la bande de revêtement (58) sont réalisées conjointement sur un corps de rail du rail de guidage (10) qui est homogène au niveau du matériau de base.

18. Système de guidage linéaire selon l'une des revendications 1 à 17,
**caractérisé en ce que** la glissière de guidage (16) et la zone de contact de la bande de revêtement (58) sont disposées sur un corps de rail qui est intégralement cohérent au niveau du matériau.

19. Système de guidage linéaire selon , l'une des revendications 1 à 18,
**caractérisé en ce que** le rail de guidage (10) présente au moins deux glissières de guidage (16) agencées parallèlement entre elles, qui sont recouvertes conjointement par la bande de revêtement (56).

20. Système de guidage linéaire selon l'une des revendications 1 à 19,
**caractérisé en ce que** le rail de guidage (10) présente une surface de fixation (18), une surface de sommet (20) opposée à la surface de fixation (18) et deux surfaces latérales (22) reliant la surface de fixation (18) à la surface de sommet (20), **en ce qu'**au moins une glissière de guidage (16) est réalisée sur chacune des surfaces latérales (22) et **en ce que**, sur chaque surface latérale (22), au moins une bande de revêtement (56) est prévue pour la au moins une glissière de guidage (16) correspondante.

21. Système de guidage linéaire selon la revendication 20,
**caractérisé en ce que**, avec la présence de respectivement au moins deux glissières de guidage (16) sur chacune des surfaces latérales (22), toutes les glissières de guidage (16) de chacune des surfaces latérales (22) sont recouvertes par respectivement une bande de revêtement (56) commune.

22. Système de guidage linéaire selon l'une des revendications 1 à 21,
**caractérisé en ce que** la bande de revêtement (56) comprend un matériau métallique, en particulier de l'acier,

23. Système de guidage linéaire selon l'une des revendications 1 à 22,
**caractérisé en ce que** la bande de revêtement (56') comprend un matériau plastique.

24. Système de guidage linéaire selon l'une des revendications 1 à 23,
**caractérisé en ce que** le coulisseau est guidé de façon coulissante sur la glissière de guidage conçue comme une glissière à coulisse.

25. Système de guidage linéaire selon l'une des revendications 1 à 24,
**caractérisé en ce que** le coulisseau (14) est guidé sur la glissière de guidage (16) conçue comme une glissière de roulement par l'intermédiaire d'au moins un corps de roulement (26).

26. Système de guidage linéaire selon la revendication 25,
**caractérisé en ce que** le coulisseau est guidé sur la glissière de roulement par au moins un galet de roulement logé sur cet ensemble de façon pivotante.

27. Système de guidage linéaire selon la revendication 25,
**caractérisé en ce que** le coulisseau (14) est guidé sur la glissière de roulement (16) par au moins une rangée de corps de roulement (26) circulant le long d'un chemin périphérique sans fin.

28. Système de guidage linéaire selon l'une des revendications 1 à 27,
**caractérisé en ce que** la bande de revêtement (56a) est fixée sur le coulisseau (14a) pour le déplacement commun avec celui-ci le long de l'axe longitudinal.

29. Système de guidage linéaire selon l'une des revendications 1 à 27,
**caractérisé en ce que** la bande de revêtement (56) chemine sur son côté plat, tourné vers la glissière de guidage, en frottant sur un dispositif de surface d'appui (78) du coulisseau (14) et **en ce que** le coulisseau (14) comprend des moyens d'approche (74) qui maintiennent la bande de revêtement (56) dans le sens longitudinal en amont et en aval du dispositif de surface d'appui (78) à proximité du rail de guidage (10).

30. Système de guidage linéaire selon la revendication 29,
**caractérisé en ce que** la bande de revêtement (56) présente des extrémités de bande (124) libres qui sont maintenues sur les zones d'extrémité du rail de guidage (10) qui sont espacées dans le sens longitudinal.

31. Système de guidage linéaire selon la revendication 30,
**caractérisé en ce qu'**au moins l'une des extrémités de bande (124) peut être fixée dans un bloc d'ancrage (126, 128) qui s'appuie sur une surface avant (150) axiale de l'extrémité de rail concernée.

32. Système de guidage linéaire selon la revendication 31,
**caractérisé en ce que** deux bandes de revêtement (56) disposées sur des surfaces latérales (22) opposées du rail de guidage (10) peuvent être fixées dans le bloc d'ancrage (126, 128).

33. Système de guidage linéaire selon la revendication 31 ou 32,
**caractérisé en ce que** le bloc d'ancrage (126, 128) peut être emboîté axialement sur l'extrémité de rail correspondante et présente à cet effet au moins une partie de fiche (136) axiale avec laquelle il redouvre le rail de guidage (10) sur son pourtour extérieur dans un plan axial.

34. Système de guidage linéaire selon l'une quelconque des revendications 30 à 33,
**caractérisé en ce que** la bande de revêtement (56) peut être serrée par des moyens de serrage (140, 142, 144) qui sont disposés dans la zone d'au moins une extrémité de rail.

35. Système de guidage linéaire selon la revendication 34,
**caractérisé en ce que** les moyens de serrage (140, 142, 144) comprennent des composants de serrage (140, 144) réglables,

36. Système de guidage linéaire selon la revendication 34 ou 35,
**caractérisé en ce que** les moyens de serrage (140, 142, 144) comprennent au moins un composant de serrage (142) élastique comme un ressort.

37. Système de guidage linéaire selon l'une des revendications 29 à 36,
**caractérisé en ce que** le coulisseau (14) comprend un élément de coulisseau (44) responsable de son guidage sur le rail de guidage (10) et **en ce que** les moyens d'approche (74) sont disposés sur au moins une unité de guidage de bande (48) pouvant être placée sur le rotor (44).

38. Système de guidage linéaire selon la revendication 37,
**caractérisé en ce que** le dispositif de surface d'appui (78) est également disposé au moins en partie, en particulier complètement, sur la au moins une unité de guidage de bande (48).

39. Système de guidage linéaire selon la revendication 37 ou 38,
**caractérisé en ce que** des organes de fixation (82) servant à l'assemblage du rotor (44) sont réalisés également pour la disposition de l'unité de guidage de bande (48).

40. Système de guidage linéaire selon la revendication 39,
**caractérisé en ce que** des vis de fixation (82), qui servent à la fixation d'unités supérieures (52) du coulisseau (44) sur un corps principal (50) du coulisseau (44), sont pourvues d'un filetage supplémentaire (90) qui sert à l'application ultérieure de l'unité de guidage de bande (48) sur le coulisseau (44) prémonté.

41. Système de guidage linéaire selon l'une des revendications 37 à 40,
**caractérisé en ce qu'**une unité de guidage de bande (48) est disposée sur chacune des surfaces d'extrémité (46) se faisant face axialement du rotor (44).

42. Système de guidage linéaire selon la revendication 41,
**caractérisé en ce que** les unités de guidage de bande (48) présentent un contour extérieur qui s'amincit avec l'augmentation de la distance au coulisseau (44), vu dans le sens axial et à partir du coulisseau (44).

43. Système de guidage linéaire selon l'une des revendications 37 à 42,
**caractérisé en ce que** la bande de revêtement (56) est guidée à l'extérieur en passant devant le coulisseau (44) et est protégée par un étrier de protection (112) disposé sur la au moins une unité de guidage de bande (48).

44. Système de guidage linéaire selon l'une des revendications 1 à 43,
**caractérisé en ce que** le coulisseau (14) porte au moins un distributeur de produit lubrifiant (96) pour la lubrification de la bande de revêtement (56).

45. Système de guidage linéaire selon la revendication 44,
**caractérisé en ce que** le distributeur de produit lubrifiant comprend un corps lubrifiant (96) contenant du lubrifiant, qui reste en contact lubrifiant avec la bande de revêtement (56).

46. Système de guidage linéaire selon la revendication 45,
**caractérisé en ce que** le corps lubrifiant (96) est en même temps en contact lubrifiant avec au moins une glissière de guidage (16) recouverte par la bande de revêtement (56).

47. Système de guidage linéaire selon la revendication 45 ou 46,
**caractérisé en ce que** le corps lubrifiant (96) est disposé dans une unité de guidage de bande (48) et prend en charge, si on le souhaite, au moins une partie de la fonction de guidage de bande de l'unité de guidage de bande.

48. Système de guidage linéaire selon la revendication 47,
**caractérisé en ce que** dans l'unité de guidage de bande (48) est logée une chambre de réserve de lubrifiant (106) qui est en liaison d'alimentation avec le au moins un corps lubrifiant (96).
